# EUROPEAN PATENT APPLICATION

(11) **EP 1 199 643 A1**
(43) Date of publication of application: **24.04.2002**
(21) Application number: 00122627.3
(22) Date of filing: 17.10.2000
(51) Int. Cl.: G06F 17/30

(54) **Method and apparatus for providing data adapted to a user environment**

(71) Applicant: SUN MICROSYSTEMS, INC., Palo Alto, California 94303 (US)
(72) Inventor: Jahnke, Jörg, 22453 Hamburg (DE)
(74) Representative: HOFFMANN - EITLE

(57) **Abstract**

Method and apparatus for providing resources adapted to a user environment wherein user parameter means obtain a user parameter for selecting a user environment, for example a location or a user language preference upon user input. Application means execute an application independent of the user parameter including reading a resource identifier independent of the user parameter, e.g. during generating a web page. Lookup means load a lookup object which links the resource identifier and resource data, the resource data being dependent on the user parameter, e.g. data to be presented to a user in a particular language and/or format. The lookup means calls a lookup function for obtaining from the lookup object resource data based on the read resource identifier. Thus, applications may be written independent of a user environment, i.e. of the selected user parameter, and information may be presented to a user in a local format or language comfortable for the user.

## Description

### Field of the Invention

The present invention relates to a method and apparatus for providing resources adapted to a user environment.

### Background of the Invention

In today's communication networks a user, e.g. operating a client data processing device, may access various kinds of information remotely stored at a server located at an arbitrary site throughout the world, for example stored at a data providing server connected to a network such as the Internet.

Information available for access by a client may be constituted by text information, image information, video information, audio information and similar. The information may be presented to the user, e.g., by generating a web-page at the server data processing device and transmitting display contents to the user for local display. A web page is a piece of information which may be stored at a data server and which may be accessed by a user operating a data processing device through a network. The user could for example specify an address or URL (Uniform Resource Locator) of a particular web page in the network and retrieve the corresponding information. In many cases web pages are dynamically generated upon request by the client by specific applications, for example executed at a web server in a process wherein the web page application includes text elements, graphic elements and similar into display frames and transfers these frames to the client for local display.

Today's communication tools allow a user at any location, provided he has access to a computer network, to quickly access virtually any kind of information or services throughout the world, including for example viewing information for buying a product, retrieving published information or accessing a user account for example for setting personal data or similar.

Accordingly, a large number of users from different locations may access one and the same piece of information located somewhere and a situation may occur where users for example speaking different languages access the same information, e.g. provided on a web page, and a user may not be familiar with a language the web page is presented in and may not be able to understand the information presented. Further, information is often presented in a format specific to a country or region. Users at different locations may expect for example date, time or floating point numbers in different formats, for example in the USA a user may expect the date represented as "month/day/year" or in Germany a user may expect the date represented as "day.month.year".

Therefore information should be presentable in different languages or formats such that all potential users may access and understand the information.

As a solution it is conceivable to write, e.g. a web page application, in a number of different languages or formats, one version for each language, such that all potential users may access and understand the information presented on the web page by selecting to retrieve the web page in a desired language or format.

While this approach may work well in a case where limited amount of information is to be made available to users, in case a large amount of information, e.g. a large number of web pages or similar is provided, adapting the contents to different languages may be time consuming and cost intensive.

### Summary of the Invention

It is therefore desirable to present information to different users in different versions at reduced development requirements and costs.

According to an embodiment a method provides resources to different users adapted to a user environment by setting a user parameter for selecting the user environment, executing an application independent of the user environment including reading a resource identifier also independent of the user parameter, loading a lookup object linking the resource identifier and resource data dependent on the user parameter and calling a lookup function for obtaining from the lookup object resource data based on the read resource identifier.

According thereto applications independent of a user environment may be written and executed, for example web pages independent of a language of a potential user. If a user wishes to access the application or web page, the lookup object may be used for linking, e.g. a language independent resource identifier with resource data such as a character string in a particular language or format. The retrieved resource data may then be presented to the user.

The user environment may include a user location and/or a user language preference and similar.

Resource data may be constituted by an array of at least one character and/or a resource function including rules for character representation. A resource function may include rules for date representation and/or time representation and/or currency representation and/or floating point representation.

The lookup function may include generating a string identifier consisting of the resource identifier and the user parameter, performing the lookup function using the string identifier, and the lookup object may include an assignment between the string identifier and the resource data dependent on the user parameter.

Further the lookup function may include calling a dictionary function for obtaining one of a plurality of lookup objects corresponding to the user parameter and which may link the resource identifier with the resource data, and

Still further, the lookup object may link the resource identifier with a plurality of user parameters and each of the plurality of user parameters with resource data.

The application may be executed at an application means and may be controlled by a remotely located client data processing device, the user parameter may be received at the application means from the client, and the resource data may be transmitted to the client.

The method may further include reading resource data, and calling the lookup function for obtaining from the lookup object a resource identifier based on the read resource data.

The user parameter may be stored in an object or may be passed from a client to an application server executing the application.

A programming language may be used for implementing the method of one of the claims 1 - 11 and the programming language may be a scripting language, e.g., the Visual Basic Scripting language.

The programming language may be the Visual Basic Scripting language and said program may be in the form of Microsoft Active Server Pages.

Further examples are disclosed in further claims.

### Brief description of the drawings:

Fig. 1 shows a block diagram illustrating a system for providing resources dependent on a user environment according to an embodiment of the invention,
Fig. 2 shows a flow diagram illustrating steps of providing resources adapted to a user environment according to an embodiment of the invention,
Fig. 3a shows a flow of steps in the method according to an embodiment of the invention, particularly outlining steps for obtaining resource data,
Fig. 3b shows a flow of steps in the method according to an embodiment of the invention, particularly outlining steps for obtaining resource data,
Fig. 3c shows a flow of steps in the method according to an embodiment of the invention, particularly outlining steps for obtaining resource data,
Fig. 4 shows a block diagram illustrating elements of a system for providing resources adapted to a user environment according to another embodiment of the invention, specifically describing interaction with a client,
Fig. 5a shows a flow diagram illustrating steps of the method according to another embodiment of the invention, specifically outlining steps for providing resources to a client,
Fig. 5b shows a flow diagram illustrating steps of the method according to another embodiment of the invention, specifically outlining steps for receiving resource data from the client,
Fig. 6 shows a time sequence of processing steps of the method according to another embodiment of the invention,
Fig. 7 shows a time sequence of processing steps of the method according to another embodiment of the invention,
Fig. 8 shows a time sequence of processing steps of the method according to another embodiment of the invention, and
Fig. 9 shows a time sequence of processing steps of the method according to another embodiment of the invention.

### Detailed Description of the Preferred Embodiments

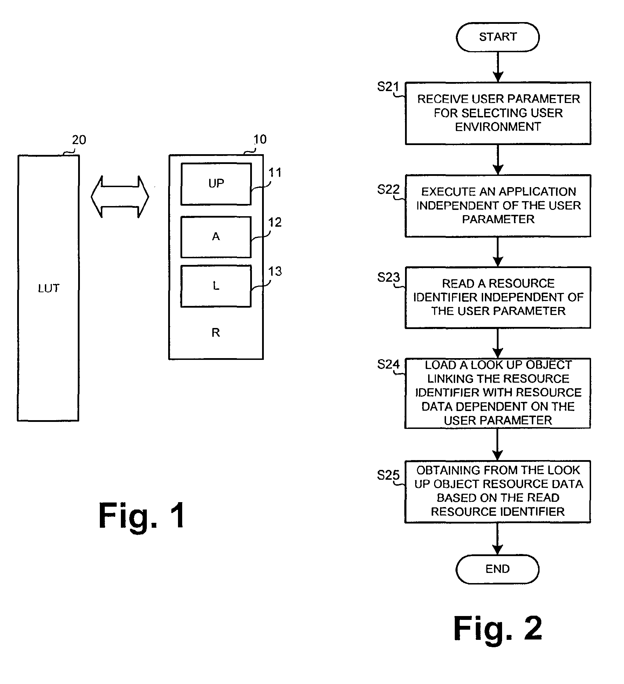

In the following an embodiment of the invention will be described with respect to Fig. 1. Fig. 1 shows elements of a system for providing resources adapted to a user environment according to an embodiment of the invention. The embodiment of Fig. 1 allows to write an application independent of a user environment and allows, e.g., to provide localization to the information to be presented to a user.

Fig. 1 shows resource means 10, e.g. constituted by a data processing device such as a server having large capacity for serving a plurality of users. The resource means 10 includes user parameter means 11 for setting and/or storing a user parameter for selecting a user environment, for example a location or a user language preference upon user input. Further, the resource means 10 includes application means 12 for executing an application independent of the user parameter including reading a resource identifier independent of the user parameter, e.g. during generating a web page. The resource means 10 further comprises lookup means 13 for loading a lookup object which links the resource identifier and resource data, the resource data being dependent on the user parameter, e.g. data to be presented to a user. Further, the lookup means calls a lookup function for obtaining from the lookup object resource data based on the read resource identifier.

Further, Fig. 1 shows a lookup table 20 preferably containing information to be accessed by the lookup object and linking the resource identifier independent of the user parameter and resource data dependent on the user parameter. The lookup table may for example be stored in a memory of the resource means or in a memory connectable to the resource means, such as a database.

The system shown in Fig. 1 allows to provide resources such as text information depending on a user environment such as a selected language and/or presentation format. An application, e.g. for providing web pages to a user may thus be written independent of the user parameter and when executed, e.g. under control of a particular user, the application and the lookup function may present information adapted to the selected user parameter, e.g. in a particular language or format which may be understood by the user.

In the following, the elements shown in Fig. 1 will be outlined in further detail.

The resource means 10 may for example be a server having large capacity connected to a computer network, such as the Internet, and may be accessible by a plurality of users, e.g. users of different nationality, location, language and similar. The resource means 10 may also be locally connected in a local area network such as a company-wide Intranet, and may be accessible from the outside through a wide area network. The resource means 10 may further be constituted by at least one code section executed on a data processing device providing further services, e.g. network services as provided by a web server. Communication between the resource means 10 and the plurality of users may be accomplished via packet switched transmission in a network, via dedicated communication links including wireless communication.

The user parameter means 11 may be constituted by a dedicated data processing device or may be constituted by a code section containing instructions for setting at least one user parameter for selecting a user environment for the users, and may communicate with the resource means 10 via internal connections of the resource means, a network, a dedicated communication link including wireless transmission and similar.

The user parameter may be associated with a selected language, a user location or similar. For example, the user parameter may be set in accordance with a telephone country code used by a user for accessing the resource means 10, e.g. 49 for Germany and 01 for the US, or similar. In case of a user parameter indicating a location of the user in Germany German may be determined as a preferred language, in case the country code indicates the United States as user location, English could be determined as the preferred language. Further a particular format, e.g. of a current date, could be selected in accordance with the user parameter.

The user parameter means 11 may be accessed by the plurality of users for setting a user parameter for each user. This may be accomplished by requesting a user for selecting a user parameter or the user may transmit a selected user parameter to the user parameter means 11, e.g., with a URL. A user parameter for a particular user may be set once upon starting a communication session between the resource means 10 and the user or may be set each time, e.g., in case the user transmits a request to the resource means.

It is also possible that the user is contacted by the user parameter means questioning the user to select one of a plurality of presented languages for setting the user parameter. For example, the user could be provided with a list of available languages, for example English, German, Spanish, French and Italian and could select one of these languages as preferred language. The user could also be provided with a list of available countries and/or regions, for example Germany, Spain, North America, and could select one of these countries or regions.

The selected user parameters may be stored in association with user identifiers, e.g. as an object, in a memory accessible by the user parameter means 11. Thus, the user parameter means 11 may maintain a list of user identifiers, each associated with a preferred language. In case no language is selected or the selected language is not available, a default language could be used. In case a request for an execution of an application is received at the resource means 10 from a particular user, the user parameter means in a lookup operation could determine the preferred language for that user and resources may be provided to the user in the selected language.

The resource means 10 further includes application means 12 which may be constituted by a data processing device or by a code section containing instructions for executing an application independent of a user environment, i.e., user parameter. The application means 12 could be arranged to execute application programs controlled by a user, as for example an application program to generate a web page for user display. This could involve generating frames for display including graphic elements, text elements and similar. The application means 12 may also be arranged to independently execute applications for a plurality of users, in which case each user could control the execution of an application at the application means 12.

The applications executed at the application means 12 are independent of a selected user parameter. For example, an application controlled by a user may, instead of containing a text element in a particular language, contain a resource identifier identifying a piece of information to be included at a particular location, e.g. on a web page for display at the user. The resource identifier is independent of the user and may be translated into a particular language or format to be understood by the user in accordance with a selected user parameter. Thus, the application means may read a resource identifier independent of a user parameter and may initialize a conversion of the resource identifier into resource data in accordance with the selected user parameter for presentation to the user.

The conversion of the resource identifier into resource data for presentation to the user may be performed by the lookup means 13 arranged for calling a lookup function for obtaining from a lookup object resource data based on the read resource identifier. The lookup object preferably links a plurality of resource identifiers and resource data in dependence on a selected user parameter. The lookup means may be constituted by a data processing device or may be constituted by a code section containing instructions for performing the above outlined function. In case the lookup means is constituted by a data processing device, it may communicate with the resource means via a network or a communication link as outlined above.

Before the lookup means may access the lookup object for retrieving resource data based on a resource identifier and a user parameter, the lookup object is preferably initialized to be accessible by the lookup means. The initialization of the lookup object may be executed once upon establishing a application session with a particular user or may be initialized for each user request.

It is noted that a plurality of lookup objects may be available, and may be loaded, e.g. in dependence on requirements of an application or similar.

The lookup means 13 may receive from the application means a read resource identifier identifying a resource to be presented to a user and may call a lookup function for obtaining from the lookup object resource data based on the received resource identifier.

The resource data to be presented to the user may be constituted for example by an array of at least one character, e.g. a word in a particular language in accordance with the selected user parameter. For example, a resource identifier could identify a resource text element "intellectual property" and the resource data presented to a user for a user in Germany may for example be "Gewerblicher Rechtschutz" and for a user in France "Propriété Intellectuelle", and for a user in the United States "Intellectual Property". Of course, the selection may also be based on a language or location preference set by a user via the user parameter.

Further, the resource data may include a resource function including rules for character representation, e.g. for facilitating presentation to a user of at least one of the group consisting of date, time, currency and floating point numbers.

For example, in case the current date is to be presented to a user, the application means could call a function for obtaining the current date and could then use a function for converting the current date into a format comfortable for a user in dependence on the selected user parameter. For example, the current date "23^{rd} of August, 2000" could be converted into "08/23/00" for a user located in the United States or making a corresponding user parameter selection. Further, for a user in Germany or a user making a corresponding selection, the current date could be converted into "23.08.00" using the resource function in dependence on the selected user parameter.

In case of a floating point number, a similar sequence of steps could be carried out. For example in case the number "1.1" should be presented in a US format, e.g. for a user in the United States making a appropriate user parameter selection, the number could be presented to the user in the form of "1.1". For a user, for example in Germany, the information could be presented as "1,1". Similar conversions of resource identifiers into resource data could be performed in other cases, for example for currency representation.

Accordingly, the embodiment described above allows to write an application independent of a user environment, i.e. of a selected user parameter, and allows to localize information to be presented to a user into a local format or language comfortable for the user. The application means may therefore execute an application which is independent of a user environment and may call a lookup function for inserting localized elements, for example into a frame containing information to be presented to a particular user.

Furthermore, it is possible that locally different user input like dates and time formats as outlined above may be converted into a format independent of a user parameter or environment, e.g. using the resource functions outlined above. For example, an input by a user located in Germany, i.e. with a corresponding user parameter selection, of the floating point number "1,1" could be converted using an appropriate resource function into an internal format independent of the user parameter "1.1".

Still further, a user may also select multiple user parameters, e.g., a user parameter specifying language/format, as described above, and a user parameter specifying user settings, e.g. characteristics of the display of a device operated by the user, such as a personal data assistant (PDA) a palm top computer, mobile phone etc. A user parameter may also specify a user preference for the presentation of web pages, e.g. to generate customized web pages.

For example, a user may wish to view the current time and date at a particular position on the display of a data processing device or may wish a specific representation of a web page, e.g., to fit the information into a small screen of a mobile device.

To simultaneously support user parameters specifying languages/formats and user settings, a plurality of lookup objects may be employed.

In brief, the described embodiment provides internationalization support to applications which are written to be independent of a language or format desired by a particular user. Functions are provided supporting provision of localized text resources, functions which convert locally different user input like date and time and floating point representation into resource identifiers intended to store such data, and functions which convert resource identifiers such as a current date using resource functions into a localized format.

All communications between the above described elements may use internal connections of the resource means, a network, a dedicated communication link including wireless transmission and similar.

It is noted that a computer readable medium may be provided having a program recorded thereon, where the program is to make a computer or system of data processing devices execute functions of the above described elements. A computer readable medium can be a magnetic or optical or other tangible medium on which a program is recorded, but can also be a signal, e.g. analog or digital, electromagnetic or optical, in which the program is embodied for transmission.

Further, a computer program product may be provided comprising the computer readable medium.

In the following a further embodiment of the invention will be described with respect to Fig. 2. Fig. 2 shows a sequence of steps performed in the method according to another embodiment of the invention. The apparatus of the embodiment described with respect to Fig. 1 may be used for executing the sequence of steps of Fig. 2, however, Fig. 2 is not limited thereto.

Similar to the previous embodiment, the embodiment of Fig. 2 provides internationalization support to applications which are written to be independent of a language or format desired by a particular user. Functions are provided supporting provision of localized text resources, functions which convert locally different user input such as a current date into internal formats and functions which convert internal formats into a localized format.

In a first step S21 a user parameter is set for selecting a user environment. The user parameter may be received from a user and may be stored, e.g. at the user parameter means 11 outlined with respect to Fig. 1. The user parameter may correspond to a user environment including a location and/or a user language preference.

In a step S22 an application independent of the selected user parameter is executed, e.g. at the application means 12 outlined with respect to Fig. 1. The application may be controlled by the user, for example for preparing frames for display at the user including graphic elements, text elements and similar.

In a step S23 the application means reads a resource identifier independent of the user parameter. For example, the application executed at the application means may be a program in the form of Microsoft Active Server Pages (ASP) for presenting information to a user.

In a step S24 a lookup object linking the resource identifier independent of the user parameter, e.g. an identifier in an internal format, with resource data dependent on the user parameter is loaded or initialized. Step S24 may be executed once upon entering a session with a user or may be initialized in case a request is received from a user or a user parameter is set by the user. The resource data may be constituted by an array of at least one character, for example of an expression in a particular language. Further, the resource data may correspond to a resource function including rules for character representation for example for date representation and/or time representation and/or currency representation and/or floating point representation, as it was outlined with respect to the environment of Fig. 1.

Thereafter, in a step S25 a lookup function is called for obtaining from the lookup object resource data based on the read resource identifier. The obtained resource data may be presented to the user, for example an expression could be presented to a user in a language which is understood by the user, depending on the selected user parameter, or a date or floating point representation could be presented to the user in a format the user is comfortable with. Of course, a plurality of lookup operations could be executed, in case an application includes a plurality of resource identifiers. The function for initializing or loading the lookup object and further functions as described with respect to Fig. 2 such as the lookup operation may be written in a scripting language, and the scripting language may be the Visual Basic scripting language.

Further, the steps outlined with respect to Fig. 2 may not necessarily be performed in the shown order, instead the order of the steps may be varied as appropriate. Particularly step S24 may be executed at any appropriate point in time during the operation or may be executed only once at the beginning of a session.

Therefore, after a user parameter setting a selected user environment has been obtained, the lookup object including text resources and resource functions required for the application are loaded. The lookup object loaded for the application may include specific expressions, signs and similar which need to be presented in connection with a particular application in different languages or formats. However, it is also possible that a single dictionary, e.g. lookup object, is used for all applications containing all resource data which need to be presented to a user.

After storing the dictionary, e.g. in a session object, e.g. identified by an object identifier and/or language identifier, the application, e.g. written in the form of the Microsoft Active Server Pages format can use a function which takes a resource identifier as parameter and returns the resource text, i.e. the lookup function.

The lookup function may further check whether a dictionary exists for the selected user parameter and may retrieve the text or resource function from the lookup object. In case a resource ID does not exist, an error message may be presented to the user indicating that the resource was not found.

Further, in case a resource function is used, user specific input such as date and time as well as floating point numbers may be converted from a locally dependent format into a locally independent object, e.g. a VBScript object. This object independent of the selected user parameter may then be used for processing by the application, for example in the case of floating point numbers, mathematical operations. A result of these operations may then be presented to a user as resource data in a format or form understandable by the user, i.e. dependent on the user parameter.

In case a number of N users is accessing the system, a lookup object, e.g., including text resources and resource functions may be stored for each user, e.g. in a session object, in which case the resource data are stored N times, for each user in a particular language and/or format. In this case, after a user exits the system, the lookup object may be erased. It is understood that also a set of lookup objects may be loaded for each user.

Further, it possible that for N users with M languages one lookup object is stored for all N users. In this case resource data are stored M times, i.e., in the languages/formats chosen by the users. It is understood that also a set of lookup objects may be loaded for the plurality of users. In case a large number of users accesses the system, i.e. in case N > M, this alternative efficiently uses available storage space.

Thus, the embodiment of Fig. 2 provides internationalization support to applications which are written to be independent of a language or format desired by a particular user. Functions are provided supporting provision of localized text resources, functions which convert locally different user input like date and time and floating point representation into resource identifiers intended to store such data, and functions which convert resource identifiers such as a current date using resource functions into a localized format.

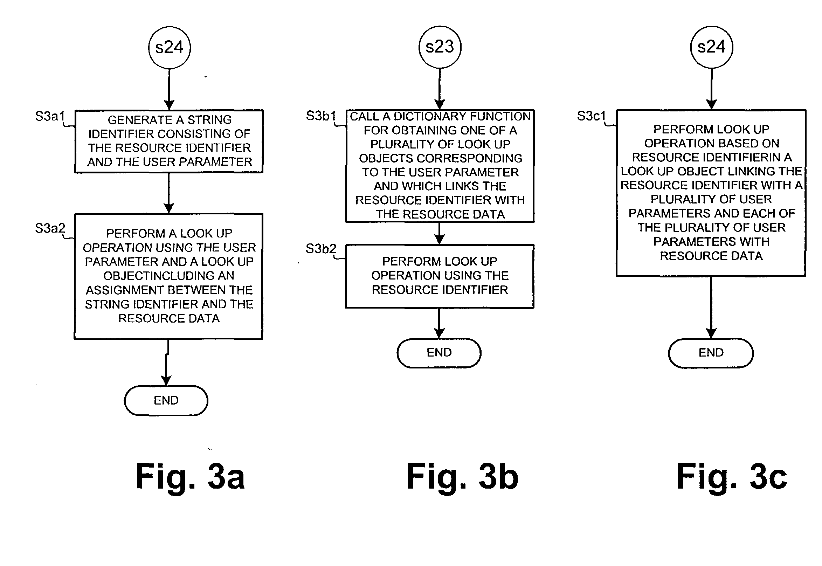

In the following a further embodiment of the invention will be described with respect to Fig. 3a. Fig. 3a shows a sequence of processing steps of the method according to another embodiment of the invention. The steps shown in Fig. 3a particularly further outline the steps for performing the lookup operation for retrieving resource data based on a resource identifier for one or a plurality of users.

The steps outlined with respect to Fig. 3a may be performed using the apparatus outlined with respect to the embodiment of Fig. 1, however, Fig. 3a is not limited thereto.

Since the steps for setting a user parameter and executing an application and reading a resource identifier are similar to the ones described with respect to Fig. 2, description starts at an entry point S24, e.g. after step S24 described with respect to Fig. 2.

In a step S3a1 a string identifier is generated, e.g. by the lookup means or a corresponding code section. The string identifier consists of the read resource identifier and the user parameter. The string identifier may be generated in a calculation operation combining the resource identifier and the user parameter.

In a step S3a2 a lookup operation is then performed by the lookup means using the user parameter and a lookup object. The lookup object in the present embodiment includes an assignment between the string identifier and the resource data depending on the resource identifier. Accordingly, the resource identifier is first converted into the string identifier using the user parameter and then in the lookup operation corresponding resource data are retrieved, e.g. from the lookup table 20 described with respect to Fig. 1.

The read resource data depending on the user parameter may then be provided to the user.

As an example it is assumed that a resource identifier, e.g. resID_IP, being associated with the expression "Intellectual Property" is read by the application. Further, it is assumed that a user parameter 49 standing for the environment "Germany" and a user parameter 01 standing for the environment "United States" is provided.

Accordingly, in case the user parameter 49 is selected by a user, the generated string identifier consists of the resource identifier resID_IP and the user parameter 49 and may read, for example, as resID_IP_49. In the lookup object this string identifier is preferably stored in association with the German expression "Gewerblicher Rechtschutz" and, in case the lookup function for obtaining from the lookup object is called based on the user parameter 49 and the resource identifier resID_IP, the resource data "Gewerblicher Rechtschutz" will be retrieved, e.g. for presentation to the user.

In case the user parameter 01 is selected the lookup means will correspondingly generate a string identifier consisting of the resource identifier resID_IP and the user parameter 01, e.g. represented by resID_IP_01. Corresponding to the German version, the lookup object stores this string identifier resID_IP_01 in association with the English expression "Intellectual Property", which will be retrieved by the lookup function, e.g. for presentation to the user selecting the user parameter 01.

Accordingly, in the described example the lookup object may contain the information shown in Table 1.

**Table 1**

| | |
|---|---|
| resID_IP_49 | "Gewerblicher Rechtschutz" |
| resID_IP_01 | "Intellectual Property" |

In case of a resource function for presenting, e.g. a floating point number to a user, the following example may occur.

It is assumed that the floating point number 1fpt7 is to be presented to a user, wherein fpt stands for floating point. Accordingly, the number to be presented to the user represents 1.7. Further, it is again assumed that a user parameter 49 stands for the user environment "Germany" and a user parameter 01 stands for a user environment "United States".

In case the user parameter 49 is selected, the string identifier will be constituted by the resource identifier fpt and the user identifier 49, e.g. yielding fpt_49. The lookup object thus preferably maintains a rule for placing a "," in a floating point number in association with the string identifier fpt_49. Accordingly, upon retrieving the rule stored in association with the string identifier fpt_49, the number 1fpt7 to be presented to a user selecting user parameter 49 will be "1,7".

Similarly, in case the selected user parameter is 01, the string identifier will be consisting of the resource parameter fpt and the user parameter 01, for example yielding fpt_01. This string identifier will be stored by the lookup object in association with a rule for placing a "." in a floating point number. Accordingly, the floating point number 1fpt7 to be presented to a user will be converted into the form "1.7".

The following contents shown in Table 2 may be stored in the lookup object in connection with the currently described example.

**Table 2**

| | |
|---|---|
| fpt_49 | rule for floating point "," |
| fpt_01 | rule for floating point "." |

The described example for floating point representation may also be used in the other direction, i.e. receiving a user input and converting the user input into an internal representation for handling at the application, the internal representation being independent of user parameter. In this case the same resource function may be used in order to convert the German version representation of "1,7" into 1fpt7 and the US version "1.7" into the internal version 1fpt7.

Similar operations may be performed in connection with presenting a date or current time to a user which selected a specific user parameter.

First, the application upon detecting an instruction to present the current date to a user could call a function for obtaining the date in an internal format independent of the user parameter and could then proceed to convert the internal representation of the local date using the selected user parameter into a corresponding localized representation of the date using a resource function performing a corresponding conversion.

The embodiment described with respect to Fig. 3a allows to efficiently present a user with localized information by converting a user parameter independent resource identifier into a string identifier comprising the resource identifier and the user parameter and performing a lookup operation in a lookup object using the string identifier for retrieving localized resource data.

In the following a further embodiment of the invention will be described with respect to Fig. 3b. Fig. 3b shows a sequence of steps performed in the method according to another embodiment of the invention. Similar to the embodiment described with respect to Fig. 3a the embodiment of Fig. 3b shows an alternative of steps performed for retrieving resource data for presentation to one or a plurality of users.

Fig. 3b particularly illustrates an example wherein first one of a plurality of lookup objects is retrieved, in correspondence to a selected user parameter. Thus, for each user parameter a lookup object is available, storing resource identifiers in association with resource data. As the steps for setting a user parameter and executing an application and reading a resource identifier are similar to the steps described with respect to Fig. 2, the flow starts at an entry point S23, e.g. following step S23 of Fig. 2.

In a step S3b1 a dictionary function is called for obtaining one of a plurality of lookup objects corresponding to the user parameter, wherein the retrieved lookup object links the resource identifier with the resource data dependent on the selected user parameter. The dictionary function thus selects at least one of a plurality of lookup objects in dependence on the selected user parameter.

The dictionary function may for example be executed at the lookup means 12 outlined with respect to Fig. 1 or may be constituted by a code section containing corresponding instructions executed at any other location. The dictionary function may receive the selected user parameter and may accordingly select at least one of a plurality of lookup objects in correspondence to the selected user parameter. The lookup object may be loaded into the environment of the application such that the lookup function may access the identified lookup object for obtaining resource data.

Thereafter, in a step S3b2 the lookup operation may be performed using the resource identifier for obtaining the resource data, e.g. for presentation to a user.

For example, in case a resource identifier for the resource "Intellectual Property" is provided, e.g. constituted by res_ID_IP, as outlined before, and in case a user parameter 49 for the environment "Germany" is provided, the lookup object may contain information as shown in Table 3.

**Table 3:**

| Lookup object for user parameter 49 (Germany) | |
|---|---|
| res_ID_IP | "Gewerblicher Rechtschutz" |

In case a user parameter 01 for the environment "United States" is selected, a lookup object may contain information as outlined in Table 4.

**Table 4:**

| Lookup object for user parameter 01 (United States) | |
|---|---|
| res_ID_IP | "Intellectual Property" |

Of course, the above-described lookup objects contain further resource identifiers and resource data.

Further, for each language identifier a plurality of lookup objects may be provided, e.g. depending on applications, requirements or similar.

The embodiment described with respect to Fig. 3b allows in a two-step operation to retrieve the required resource data, by first identifying a lookup object corresponding to the selected user identifier, e.g. selected language, and then by retrieving the resource data using the resource identifier. Accordingly, an application independent of a user environment may be executed and localized information may be introduced into, e.g. frames for presentation to a user.

In the following a further embodiment of the invention will be described with respect to Fig. 3c. Fig. 3c shows a step performed in the method according to another embodiment of the invention. As the steps for setting a user parameter, executing an application and reading a resource identifier are similar to the ones described with respect to Fig. 2, Fig. 3c starts at an entry point S24, e.g. step S24 described with respect to Fig. 2. Similar to the embodiments described with respect to Fig. 3a and Fig. 3b the embodiment of Fig. 3c particularly describes a step for obtaining resource data based on a resource identifier for one or a plurality of users.

In the present embodiment in a step S3c1 the lookup operation is executed based on a resource identifier in a lookup object, wherein the lookup object links the resource identifier with a plurality of user parameters and each of the plurality of user parameters with resource data dependent on the respective user parameter. First the resource identifier may be located in the lookup object and then the selected user parameter and thus resource data corresponding to a user identifier and a selected user parameter may be retrieved.

In the examples described with respect to Figs. 3a and 3b, in case a resource identifier res_ID_IP for "Intellectual Property" and user parameters 49 and 01 for the environments "Germany" and "United States" are provided, the lookup object may contain information as shown in Table 5.

**Table 5**

| | | |
|---|---|---|
| res_ID_IP | 49 | "Gewerblicher Rechtschutz" |
| | 01 | "Intellectual Property" |

Of course, the lookup object may contain a plurality of resource identifiers or resource functions as outlined with respect to previous embodiments.

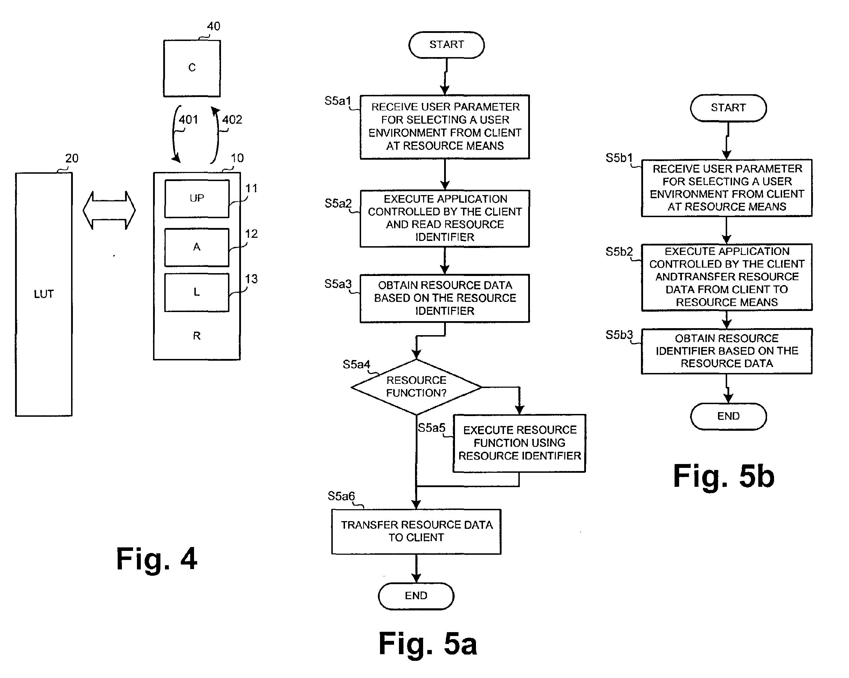

In the following a further embodiment of the invention will be described with respect to Fig. 4. Fig. 4 shows elements of an apparatus according to another embodiment of the invention. Further to the elements shown in Fig. 1, Fig. 4 shows a client 40 communicating with the resource means 10. Even though only one client is shown, a plurality of clients at different locations, e.g. different countries, regions and similar may be provided.

The client 40 may be a data processing device operated by a user and may communicate with the resource means 10 via a communication network or dedicated communication link including wireless transmissions as indicated by arrows 401 and 402.

The client may control an application executed at the resource means 10 by transmitting instructions or requests to the resource means 10 as indicated by arrow 401. A request may be a request for a particular web page, e.g. using a URL (Uniform Resource Identifier) as common in network applications.

Further, the client may transmit a selected user parameter to the resource means 10, e.g. upon request by the resource means 10, or may transmit the user parameter in association with a URL transmitted in a request to the resource means 10. Thus, the client may comprise means for selecting the user parameter at the client, e.g. by user input, and to transmit the user parameter to the data processing device, for example in a URL.

The resource means may store the user parameter transmitted from the client in an object such that the user parameter is readily available in case an application independent of the user parameter is executed at the resource means 10 and "localized" resource data need to be presented to the user.

The resource means may maintain a plurality of user parameters in the object, preferably in association with client identifiers, in order to be able to serve a large number of clients.

The resource means, upon retrieving resource data, e.g. as outlined with respect to the embodiment of Fig. 1, may transmit the resource data to the client 40 as indicated by an arrow 402.

Apart from the above-outlined modifications, the system shown in Fig. 4 is similar to the system of Fig. 1.

All communications in the shown system may be executed via communication networks, via dedicated communication links including wireless transmission or similar.

In the following a further embodiment of the invention will be described with respect to Fig. 5a. Fig. 5a shows a sequence of steps of the method according to another embodiment of the invention. The sequence of steps shown in Fig. 5a may for example be executed by the system shown in Fig. 4, however, Fig. 5a is not limited thereto. Fig. 5a particularly outlines steps for presenting "localized" resource data to a user in accordance with a selected user environment.

In a step S5a1 a user parameter for setting a user environment is received at a resource means, e.g. resource means 10 of Fig. 4, from a client, e.g. client 40 of Fig. 4.

In a step S5a2 an application controlled by the client is executed, e.g. by application means 12 shown in Fig. 4. Further, a resource identifier independent of the user parameter is read in connection with the application.

In a step S5a3 resource data based on the resource identifier are obtained, e.g. as outlined with respect to previous embodiments.

In a step S5a4 it is decided whether the retrieved resource data correspond to a resource function and in case in step S5a4 the decision is "YES", i.e. a resource function is retrieved, the resource function is executed, e.g. in dependence on the resource identifier in a step S5a5, e.g. a format conversion of date, time, currency and floating point, as outlined with respect to previous embodiments and the resource data are transmitted to the client in a step S5a6.

In case in step S5a4 the decision is "NO", e.g. in case the resource data correspond to an array of at least one character, the resource data are directly transmitted to the client in step S5a6.

The embodiment outlined with respect to Fig. 5 allows to provide a user with e.g. localized text information in a language corresponding to the user parameter or with information in a format comfortable for the user, e.g. floating point representation, date representation and similar, as outlined with respect to previous embodiments.

In the following a further embodiment of the invention will be described with respect to Fig. 5b. Fig. 5b shows a sequence of steps executed in the method according to another embodiment of the invention. The steps of Fig. 5b may be executed by the system shown in Fig. 4, however, Fig. 5b is not limited thereto.

Fig. 5b particularly outlines steps for receiving resource data depending on a user parameter from a user, e.g. in a local language or format, and to convert the received resource data into a resource identifier independent of the user parameter.

In a step S5b1 a user parameter for setting a user environment is received at a resource means, e.g. resource means 10 of Fig. 4, from a client, e.g. client 40 of Fig. 4. However, it is also possible that the user parameter is already stored at the resource means, e.g. in an object, as outlined before.

In a step S5b2 an application controlled by the client is executed and resource data dependent on the user parameter are received at the resource means from the client. For example, the client could transmit a date in a local format to the resource means.

In a step S5b3 a resource identifier based on the received resource data may be retrieved, the resource identifier being independent of the user parameter. The resource identifier may be used for internal processing at the resource means 10. A processing result may thereafter be output again to a user, e.g. according to the method outlined with respect to Fig. 5a.

The method outlined with respect to Fig. 5 may use resource functions as outlined with respect to previous embodiments and facilitate converting information provided by a user in a local format or language into a representation which is independent of the locality or language of the user.

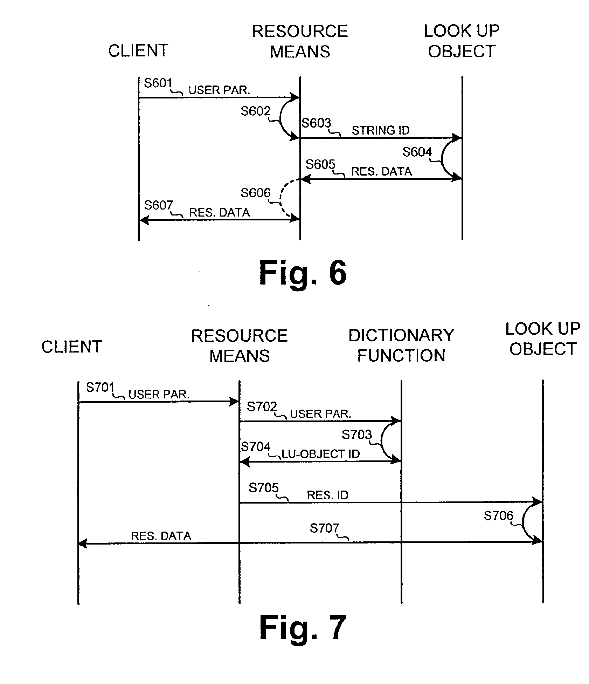

In the following a further embodiment of the invention will be described with respect to Fig. 6. Fig. 6 shows a time sequence of processing steps of the method according to another embodiment of the invention. Fig. 6 particularly outlines steps for providing resource data, i.e. localized data to a client, similar to the embodiment described with respect to Fig. 3a. The sequence of processing steps may be executed by the system described with respect to Fig. 4, however, Fig. 6 is not limited thereto.

Fig. 6 shows processing steps involving a client, such as client 40 shown in Fig. 4, resource means such as resource means 10 shown in Fig. 4 and a lookup object. Even though the lookup object may be constituted by a code section executed at the resource means, for illustration purposes the lookup object is shown as a separate entity.

In a first step S601 a user parameter is received at the resource means from the client, specifying a user environment such as a location or a preferred language. The user parameter is stored at the resource means, e.g. in a list of user parameters associated with a client identifier.

In a step S602 at the resource means an application independent of the user parameter is executed and in connection therewith a resource identifier identifying a resource independent of the user parameter is read. Further, in step S602 the user parameter is combined with the resource identifier to obtain a string identifier, for example as outlined with respect to Fig. 3a.

In a step S603 the string identifier is transmitted from the resource means to the lookup object and at the lookup object in a step S604 corresponding resource data are retrieved based on the received string identifier, as for example outlined with respect to Fig. 3a.

In a step S605 the resource data are then transmitted to the client for local display at the client. The resource data, as outlined with respect to previous embodiments, may represent expressions in a language corresponding to the selected user parameter.

Further, in case the resource data are associated with a resource function, as outlined with respect to previous embodiments, for example in case a current date, time or similar was retrieved and is to be presented to the user in a particular format, corresponding operations may be executed, e.g. at the resource means, as indicated by a step 5606. Thereafter, in a step S607 the resource data are provided to the client, e.g. the current date or time in a format corresponding to the user parameter.

The resource data may also be transmitted directly from the lookup object to the client in step S605.

The described embodiment allows to provide a user with "localized information", e.g. expressions in a particular language corresponding to the user parameter or representations of for example date, time and similar in a format corresponding to the user parameter.

In the following a further embodiment of the invention will be described with respect to Fig. 7. Fig. 7 shows a time sequence of steps performed in accordance with another embodiment of the invention. The sequence of steps may be executed by the system shown in Fig. 4, however, Fig. 7 is not limited thereto.

Fig. 7 particularly illustrates steps for providing a client with resource data in correspondence to a selected user parameter. Fig. 7 shows processing steps involving a client, resource means, a dictionary function and a lookup object. Even though the dictionary function and the lookup object may be constituted by code sections executed at the resource means, e.g. resource means 10 of Fig. 4, the dictionary function and the lookup object are shown as separate entities.

In a step S701 a user parameter selected at the client is transmitted to the resource means for setting a user parameter at the resource means in correspondence to the client, e.g. for storage in an object containing client identifiers in association with user parameters.

In a step S702 the user parameter is transmitted from the resource means to the dictionary function which selects one of a plurality of lookup objects in correspondence to the received user parameter in a step S703, as outlined with respect to embodiment of Fig. 3b.

In a step S704 the dictionary function returns a lookup object identifier identifying the detected lookup object corresponding to the user parameter.

In a step S705 the resource means transmits a read resource identifier independent of a user parameter to the detected lookup object using the received lookup object identifier.

In a step S706 the lookup object retrieves the corresponding resource data and transmits same to the client in a step S707. In case the resource data correspond to a resource function, steps similar to steps S605, S606 and S607 of Fig. 6 may be performed.

The embodiment of Fig. 7 allows a two-step operation for first identifying an appropriate lookup object corresponding to the user parameter and then retrieving the desired resource data based on the resource identifier from the detected lookup object.

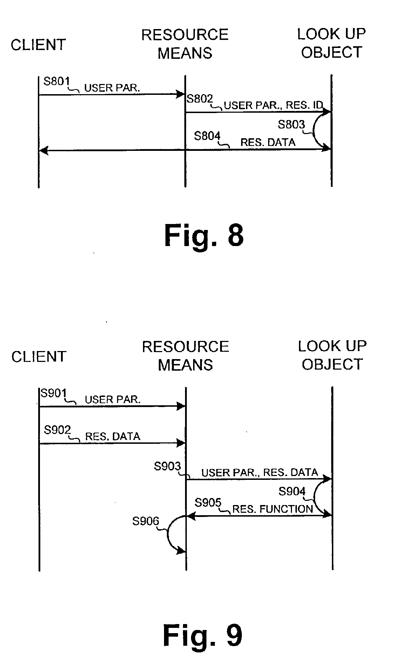

In the following, a further embodiment of the invention will be described with respect to Fig. 8. Fig. 8 shows a time sequence of steps of the method according to another embodiment of the invention. Fig. 8 illustrates an embodiment similar to the embodiment described with respect to Fig. 3c and shows steps involving a client, resource means and a lookup object, e.g. as outlined before.

In a step S801 a user parameter is received at the resource means from the client. The resource means in a step S802 reads a resource identifier independent of the user parameter in accordance with the execution of an application and transmits the user parameter and the resource identifier to the lookup object. The lookup object in a step S803 retrieves resource data corresponding to the user parameter and the resource identifier and transmits same to the client in a step S804. The steps performed according to the embodiment of Fig. 8 are similar to the ones described with respect to Fig. 3c.

In the following, a further embodiment of the invention will be described with respect to Fig. 9. Fig. 9 shows a time sequence of steps performed in the method according to another embodiment of the invention. The sequence of steps may be executed by the system described with respect to Fig. 4, however, the embodiment of Fig. 9 is not limited thereto. The steps illustrated in Fig. 9 particularly describe to convert resource data received from a client into an internal format for usage as the resource means.

Fig. 9 illustrates steps involving a client, such as client 40 of Fig. 4, resource means such as resource means 10 of Fig. 4 and a lookup object.

In a first step S901 a user parameter is received at the resource means from the client. Thereafter, in a second step S902 resource data, e.g. data in a local format or language are transmitted from the client to the resource means. The resource data may for example be a floating point number in a local format, as outlined before.

In a step S903 the resource means transmits the user parameter and the resource data to the lookup object which in a step S904 determines a resource identifier, e.g. a resource function to be applied to the resource data. The resource function or an identifier of the resource function is transmitted to the resource means in a step S905.

The resource means in a step S906 then converts the received resource data, e.g. a floating point number in a "local" format into a format internal to the resource means S906, which is independent of the user parameter, e.g. using a look up object.

The steps outlined with respect to Fig. 9 allow to convert a user input dependent on a user parameter, i.e. a "localized" input into a form which is independent of the user parameter and which may be used at the resource means for further processing.

It is noted that a computer readable medium may be provided having a program recorded thereon, where the program is to make a computer or system of data processing devices execute functions of the resource means and/or the client. A computer readable medium can be a magnetic or optical or other tangible medium on which a program is recorded, but can also be a signal, e.g. analog or digital, electromagnetic or optical, in which the program is embodied for transmission.

Further, a computer program product may be provided comprising the computer readable medium.

As described in the above embodiments, for example when writing web applications or web pages which may be used by users from different countries or localities, the applications may be developed independently of the intended users and may then be "localized" for the different countries or localities.

In an environment of for example Microsoft Active Server Pages and the Visual Basic scripting language thus a set of functions can be used to add "internationalization support". Instead of copying active server pages and then translating these copies pages into different formats or languages, the functions may be involved to convert the generic active server page, e.g. a server page independent of user parameters or user environments into a representation for display at a user which is dependent on a selected user parameter or environment.

The above described functions allow support for localized text resources, allow to convert locally different user input like date and time into internal objects and to store such data in these objects, and further provides functions which convert such objects into a localized format for a user.

Prior to using the functions the user parameter must be defined. The user parameter can be defined by offering the user a web page with a language selection. This information is then usually stored in a session object, however, the user parameter may be also passed to following pages in a URL.

In case of providing localized text resources, after the user has selected a language, i.e. user parameter, the application loads the text resources required for the application in a lookup object. The lookup object may map a resource description, i.e. the resource identifier, to the actual resource text, i.e. the resource data. The lookup object may be stored in an application - or session - object and may be identified by a language identifier.

After initializing the lookup object, an active server page application may use the lookup function taking a resource identifier as parameter and returning a resource data depending on the user parameter. Further, a function may check whether a dictionary exists for the selected user parameter and may retrieve text from the lookup object.

In case of a non-existing resource identifier an error message may be generated.

In case locally different user input is to be converted into an internal format such as a VBScript object, for example date and time as well as floating point numbers may be converted from a locally dependent format to a locally independent VBScript object using a resource function as outlined before.

In case a user is to be provided with a localized representation of e.g. date and time or floating point numbers the internal format may be converted into the local format using a resource function, as also outlined before.

According to another embodiment resource means for providing resources depending on a user environment may include the following elements:
1) Resource means for providing resources depending on a user environment, including
   - a code section containing instructions for obtaining a user parameter for setting the user environment,
   - a code section containing instructions for executing an application independent of the user parameter including reading a resource identifier independent of the user parameter, and
   - a code section containing instructions for initializing a lookup object linking the resource identifier and resource data, the resource data being dependent on the user parameter, and for calling a lookup function for obtaining from the lookup object resource data based on the read resource identifier.
2) Resource means of 1), wherein the resource data are constituted by at least on one of the group consisting of
   - an array of at least one character, and
   - a resource function including rules for character representation.
3) Resource means of 1), wherein the resource function includes rules for at least one of the group consisting of
   - date representation,
   - time representation,
   - currency representation, and
   - floating point representation.
4) Resource means of 1), wherein the user environment includes at least one of the group consisting of
   - a location, and
   - a user language preference.
5) Resource means of 1), including a code section containing instructions for loading at least one lookup object for each user.
6) Resource means of 1), including a code section containing instructions for loading at least one lookup object for a plurality of users.
7) Resource means of 1), wherein
   - the lookup means includes
      - a code section containing instructions for generating a string identifier consisting of the resource identifier and the user parameter,
      - a code section containing instructions for performing the lookup function using the string identifier, and
   - the lookup object includes an assignment between the string identifier and the resource data dependent on the user parameter.
8) Resource means of 1), comprising a code section containing instructions for calling a dictionary function for obtaining one of a plurality of lookup objects corresponding to the user parameter and which links the resource identifier with the resource data.
9) Resource means of 1), wherein the lookup object links the resource identifier with a plurality of user parameters and each of the plurality of user parameters with resource data.
10) Resource means of 1), wherein
   - the application executed at the application means is controlled by a client,
   - a code section containing instructions is provided for receiving the user parameter from the client, and
   - a code section containing instructions is provided for transmitting the resource data to the client.
11) Resource means of 1), wherein
   - a code section containing instructions is provided for reading resource data, and
   - a code section containing instructions is provided for obtaining from the lookup object a resource identifier based on the read resource data.
12) Resource means of 1), wherein the user parameter is stored in an object.
13) Resource means of 1), wherein the user parameter is passed from a client to an application server executing the application.
   According to another embodiment a client adapted to cooperate with the resource means for providing resources depending on a user environment may include the following elements:
14) Client adapted to cooperate with the resource means of one of 1) to 13), including
   - a code section containing instructions for setting the user parameter, and
   - a code section containing instructions for transmitting the user parameter to the data processing device.
      According to another embodiment a data processing system for providing resources depending on a user environment may include the following elements:
15) Data processing system for providing resources depending on a user environment, comprising a client and resource means, wherein
   - the client includes
      - a code section containing instructions for setting a user parameter for selecting the user environment, and
      - a code section containing instructions for transmitting the user parameter to the data processing device,
   - the resource means includes
      - a code section containing instructions for obtaining a user parameter for setting the user environment,
      - a code section containing instructions for executing an application independent of the user environment including reading a resource identifier independent of the user parameter, and
      - a code section containing instructions for calling a lookup function for obtaining from the lookup object resource data based on the read resource identifier and for loading a lookup object linking the resource identifier and resource data dependent on the user parameter.

In the following examples of code sections for the functions outlined above are given. It is noted that the code sections are examples for selected functions only.

CODE EXAMPLES

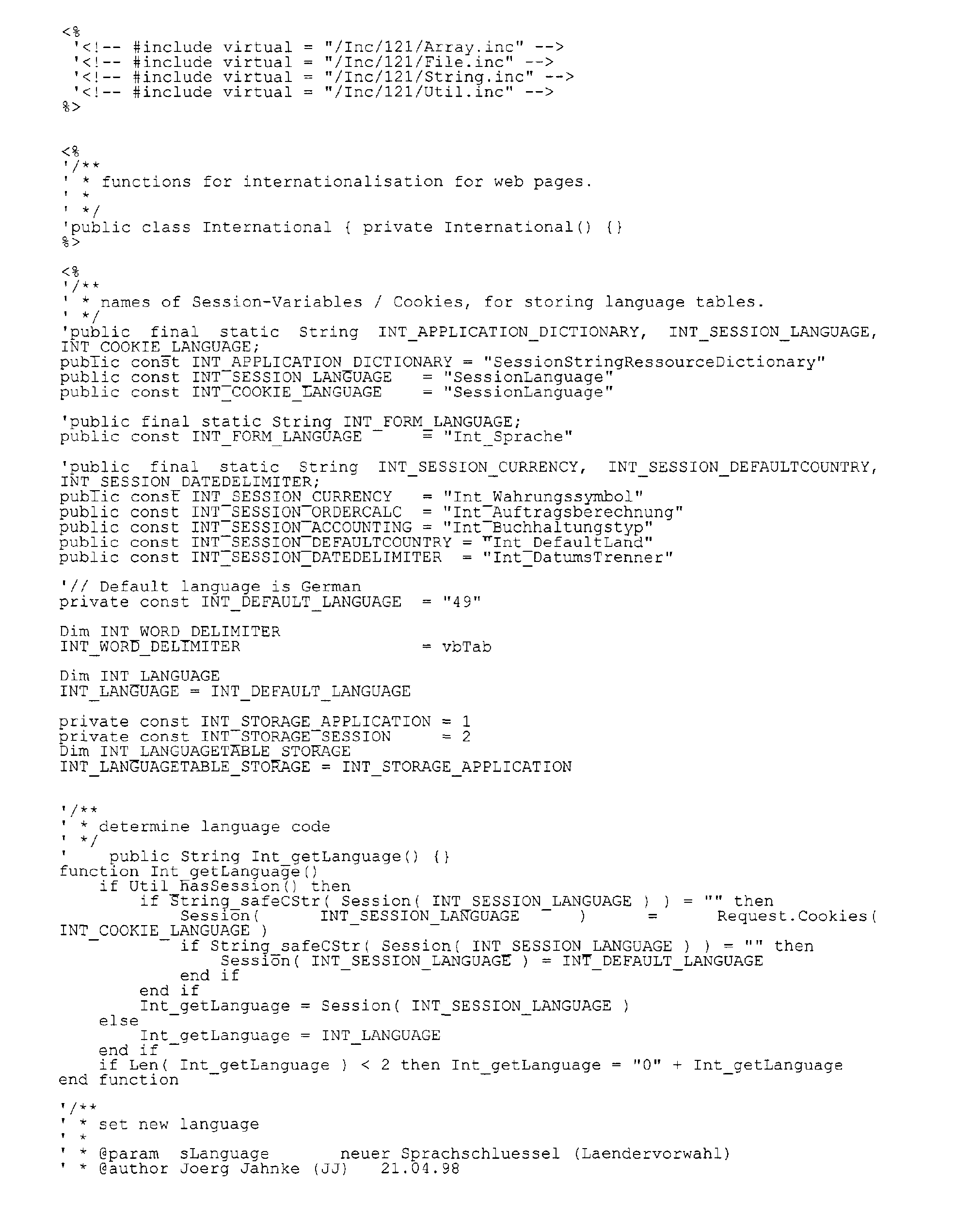

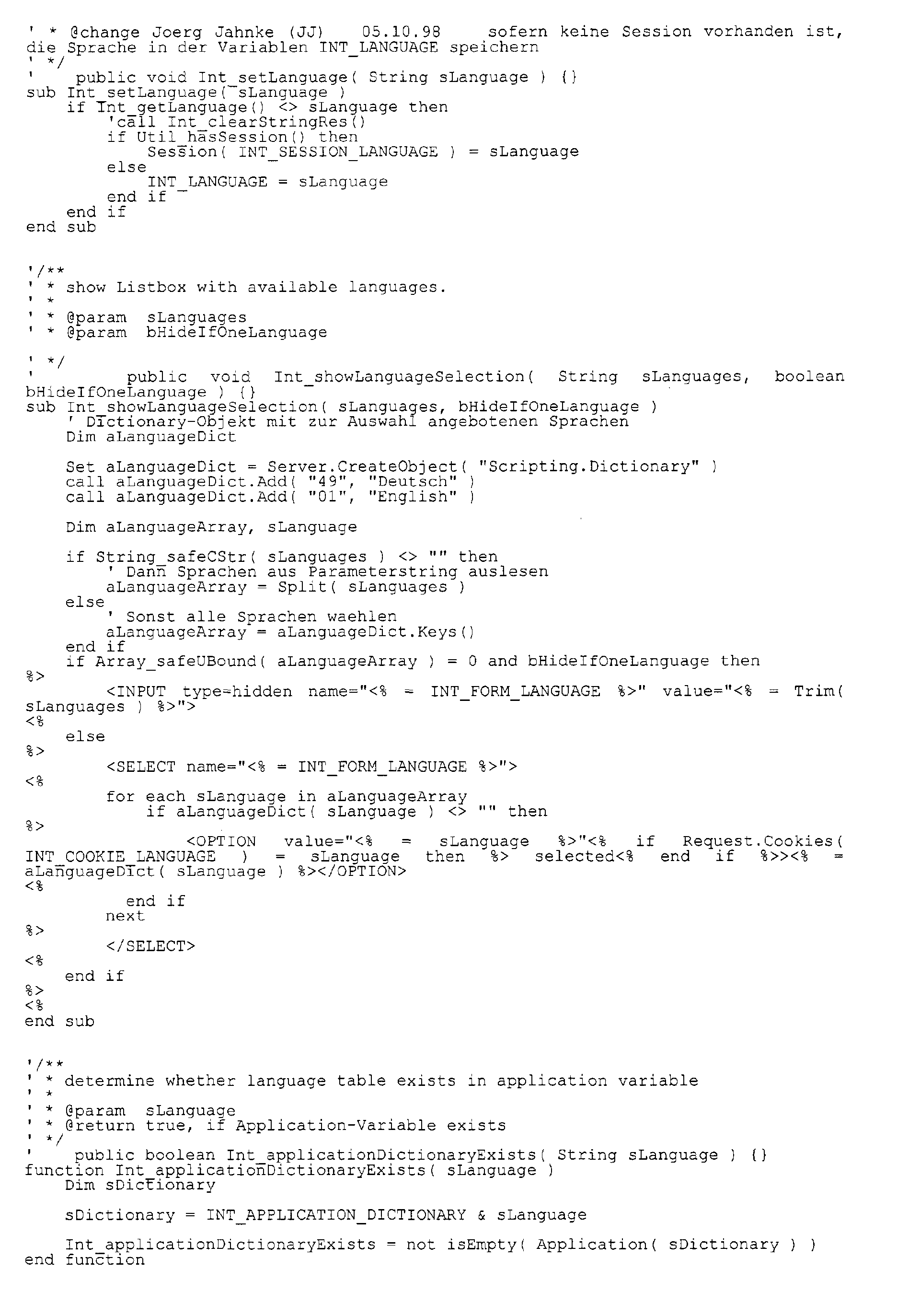

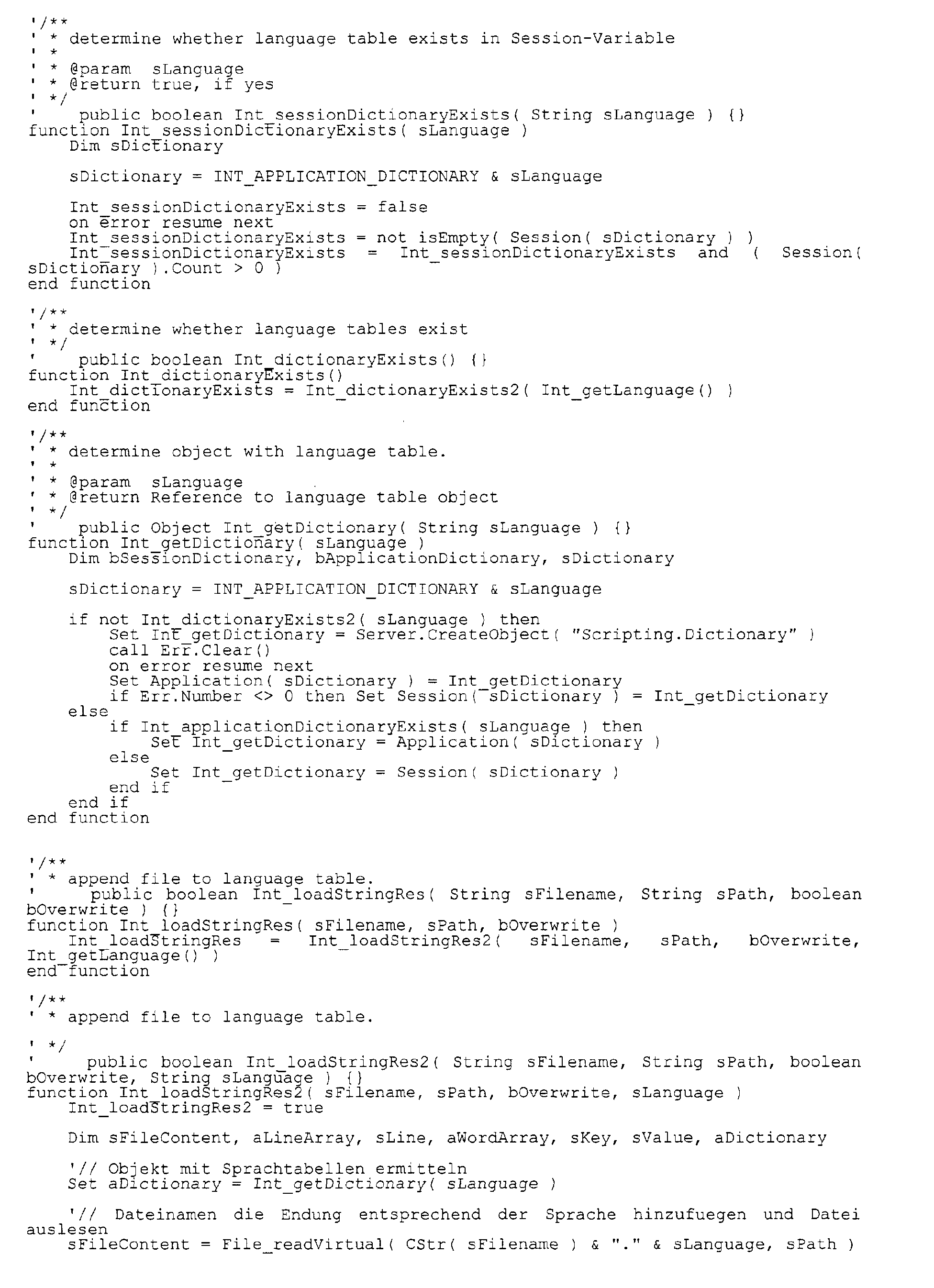

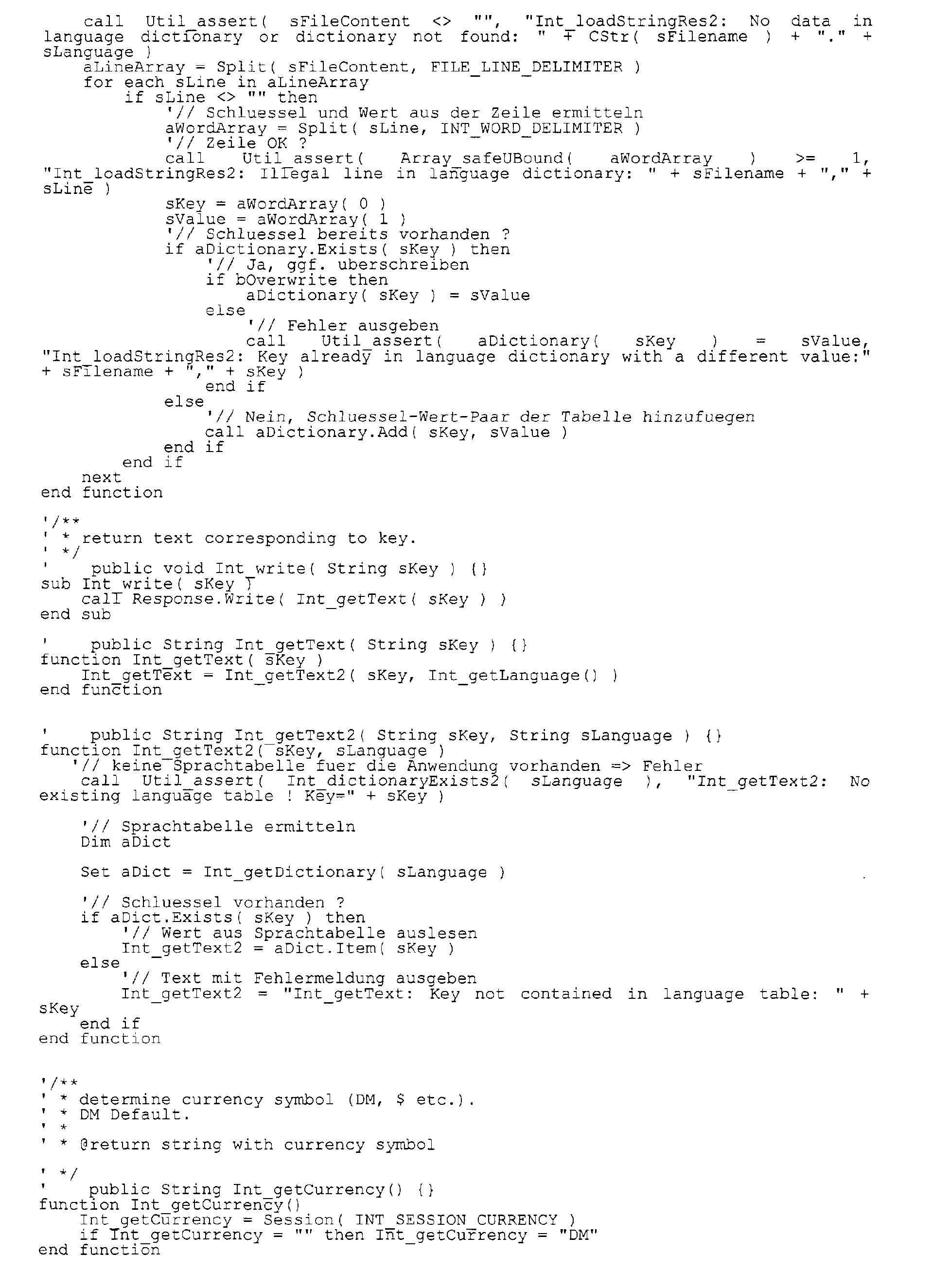

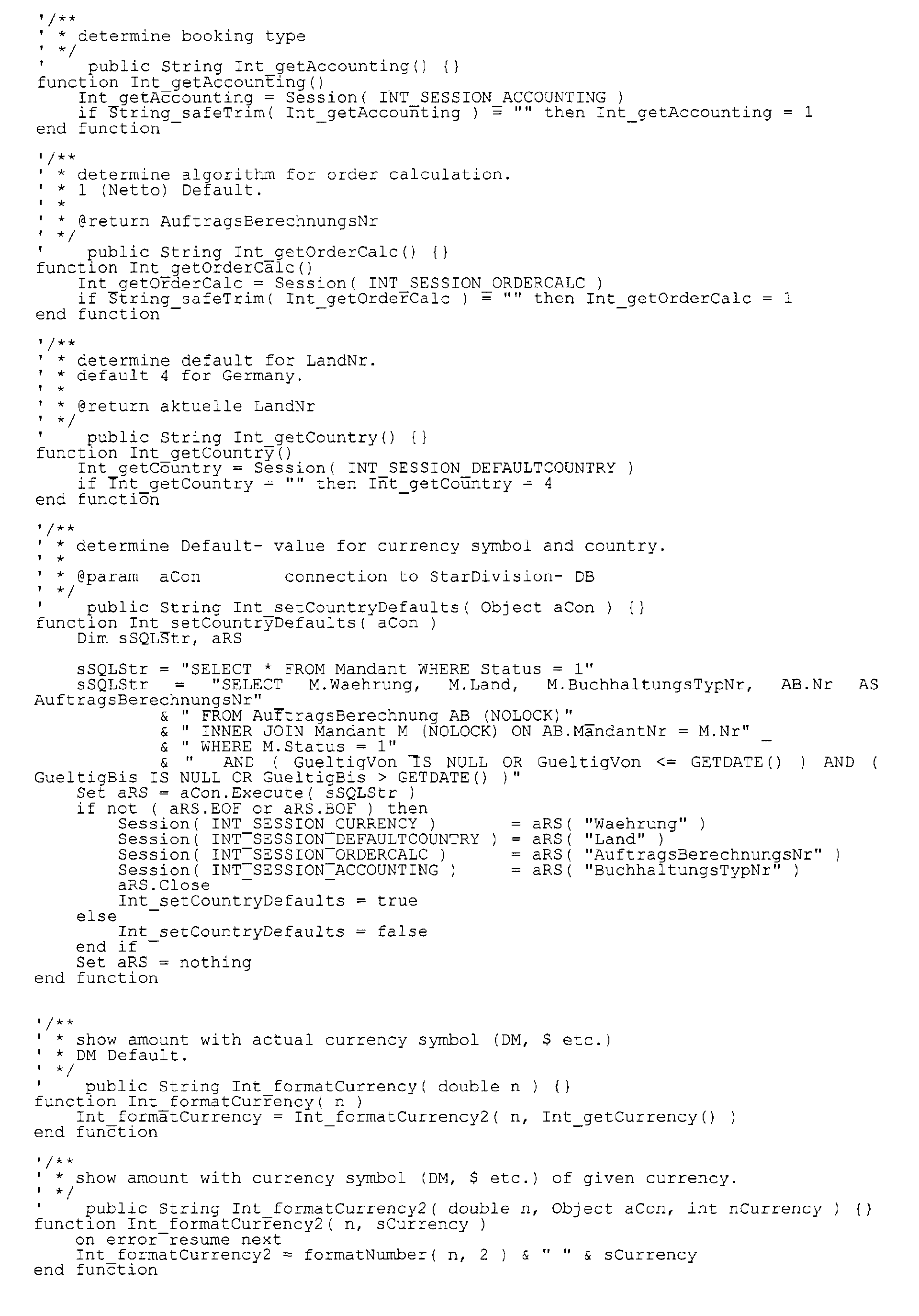

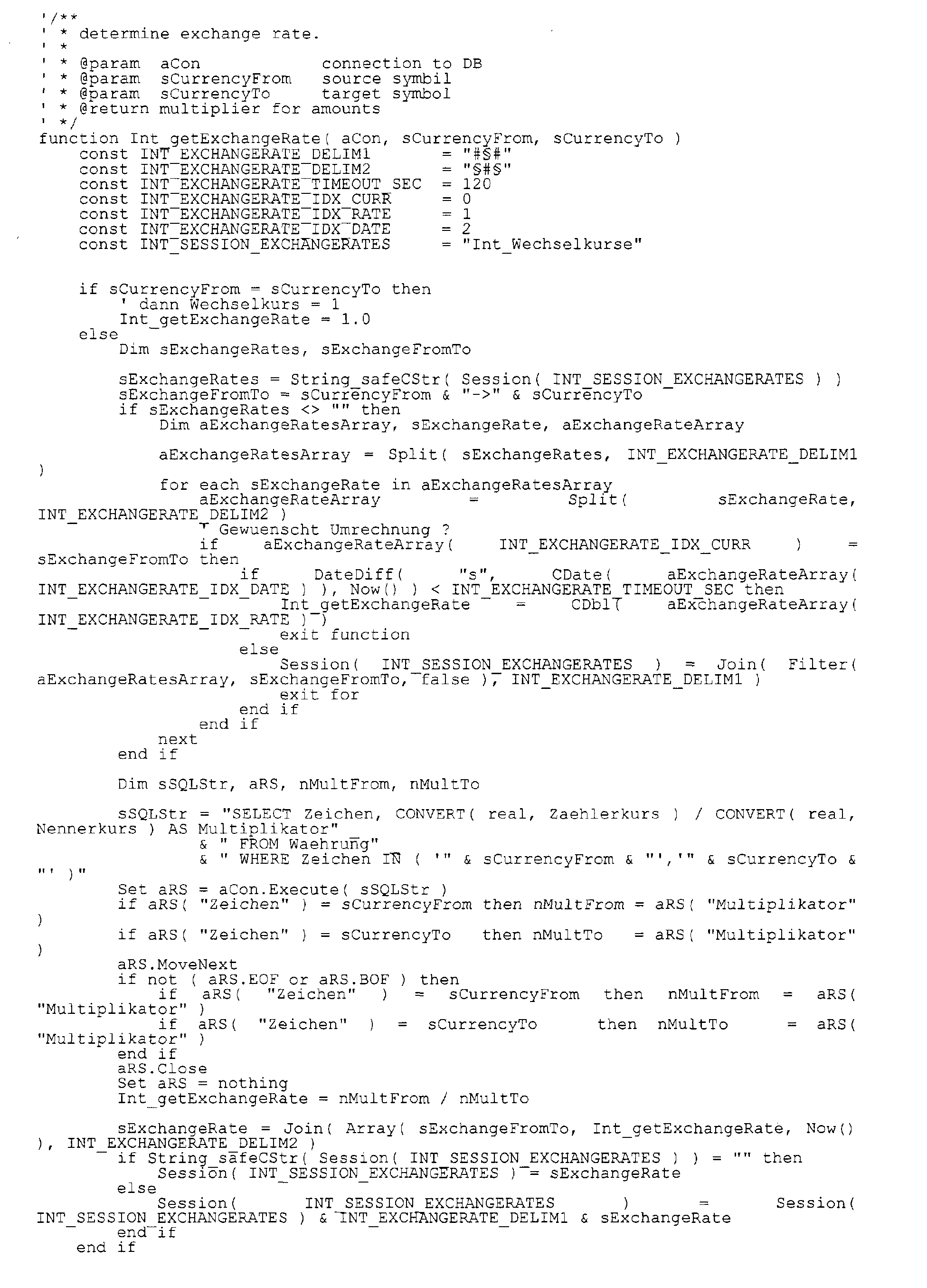

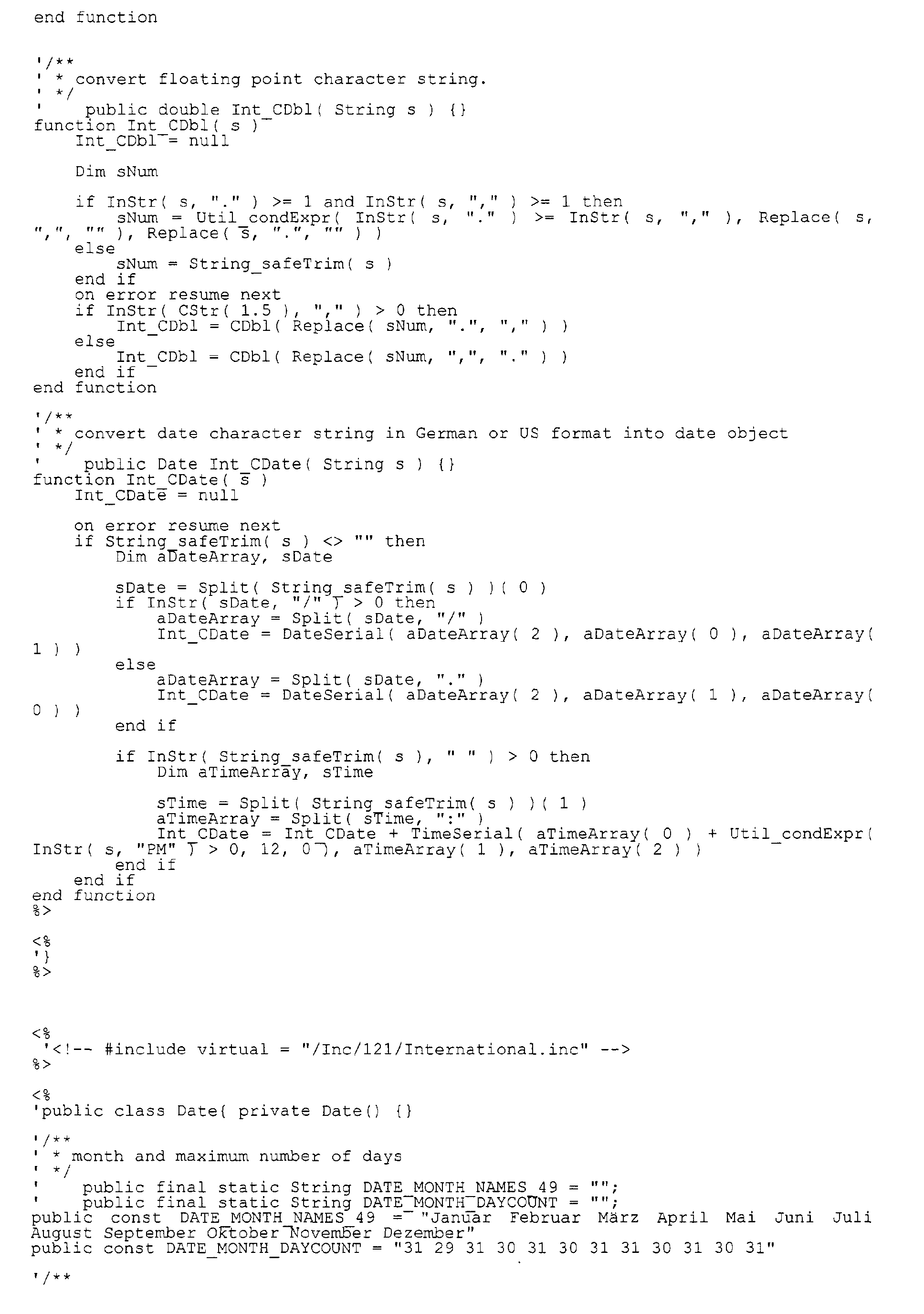

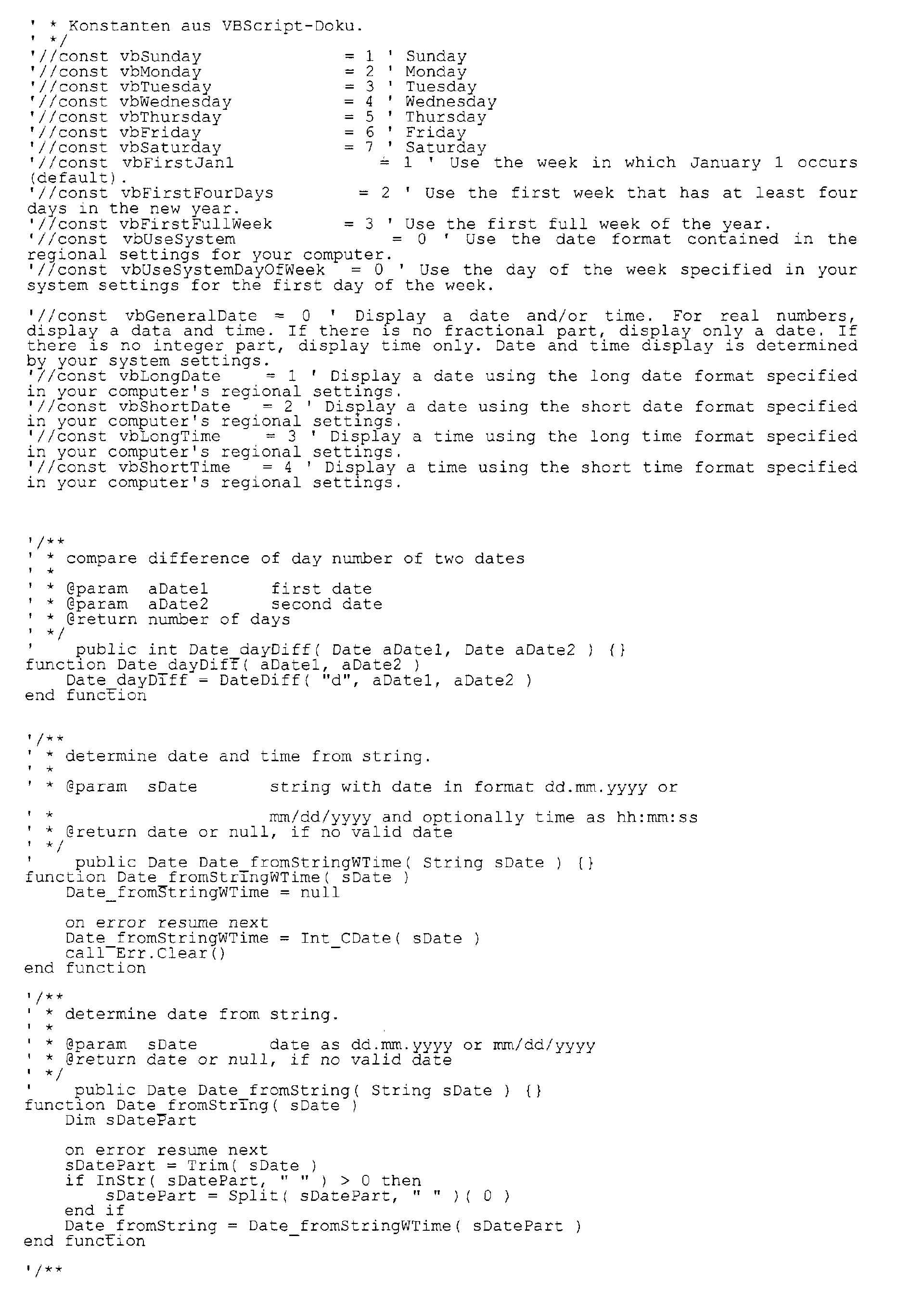

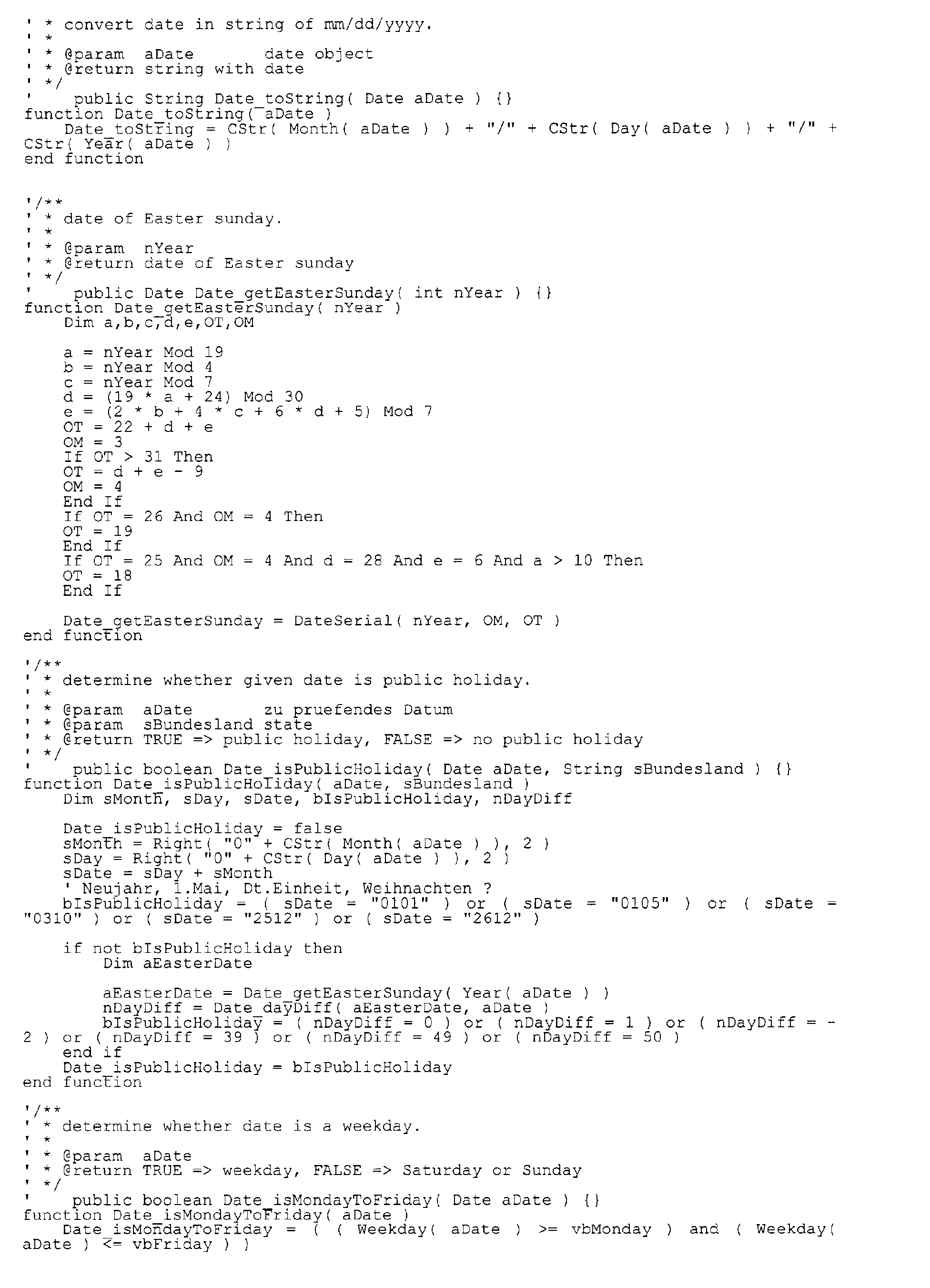

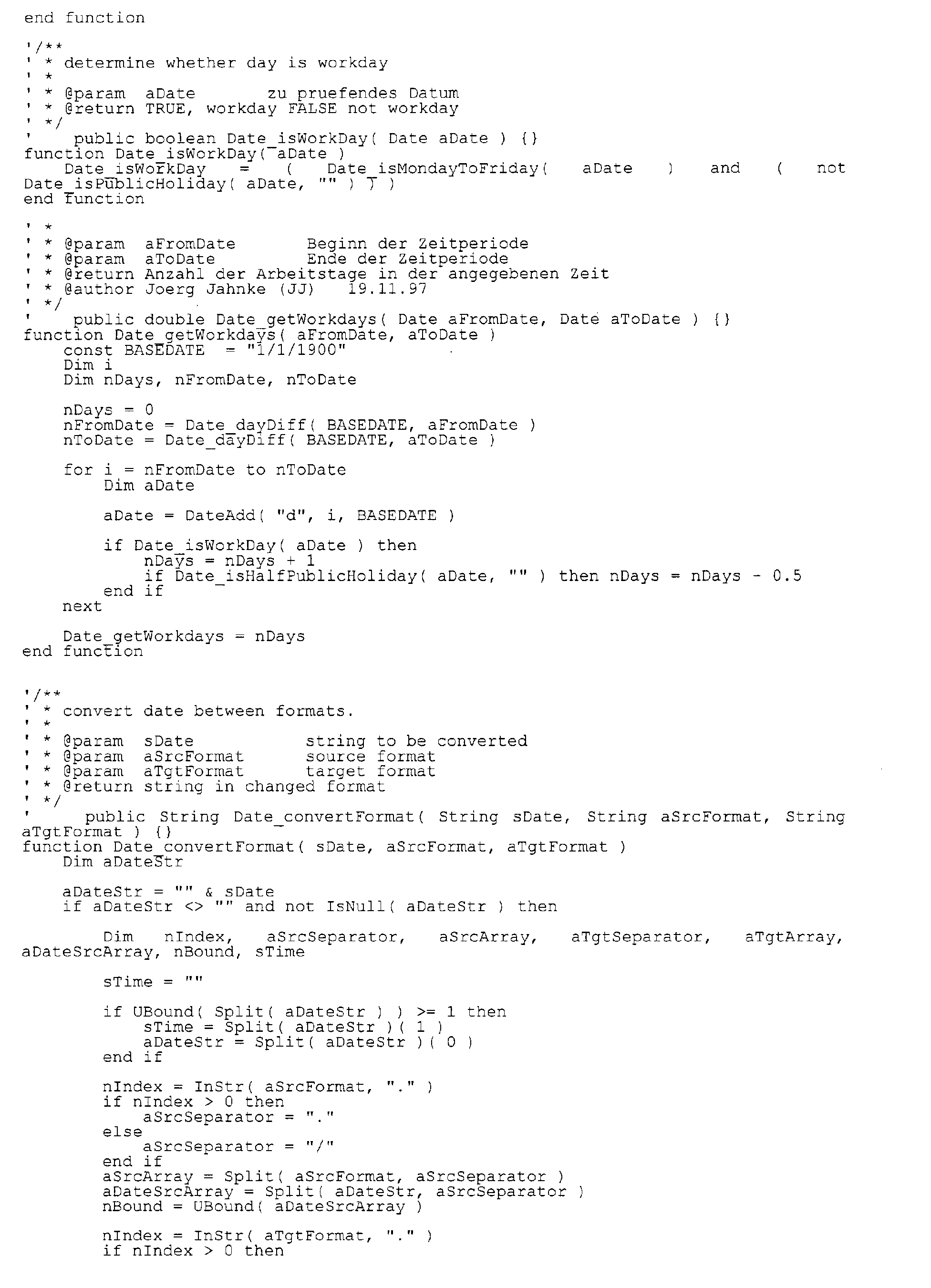

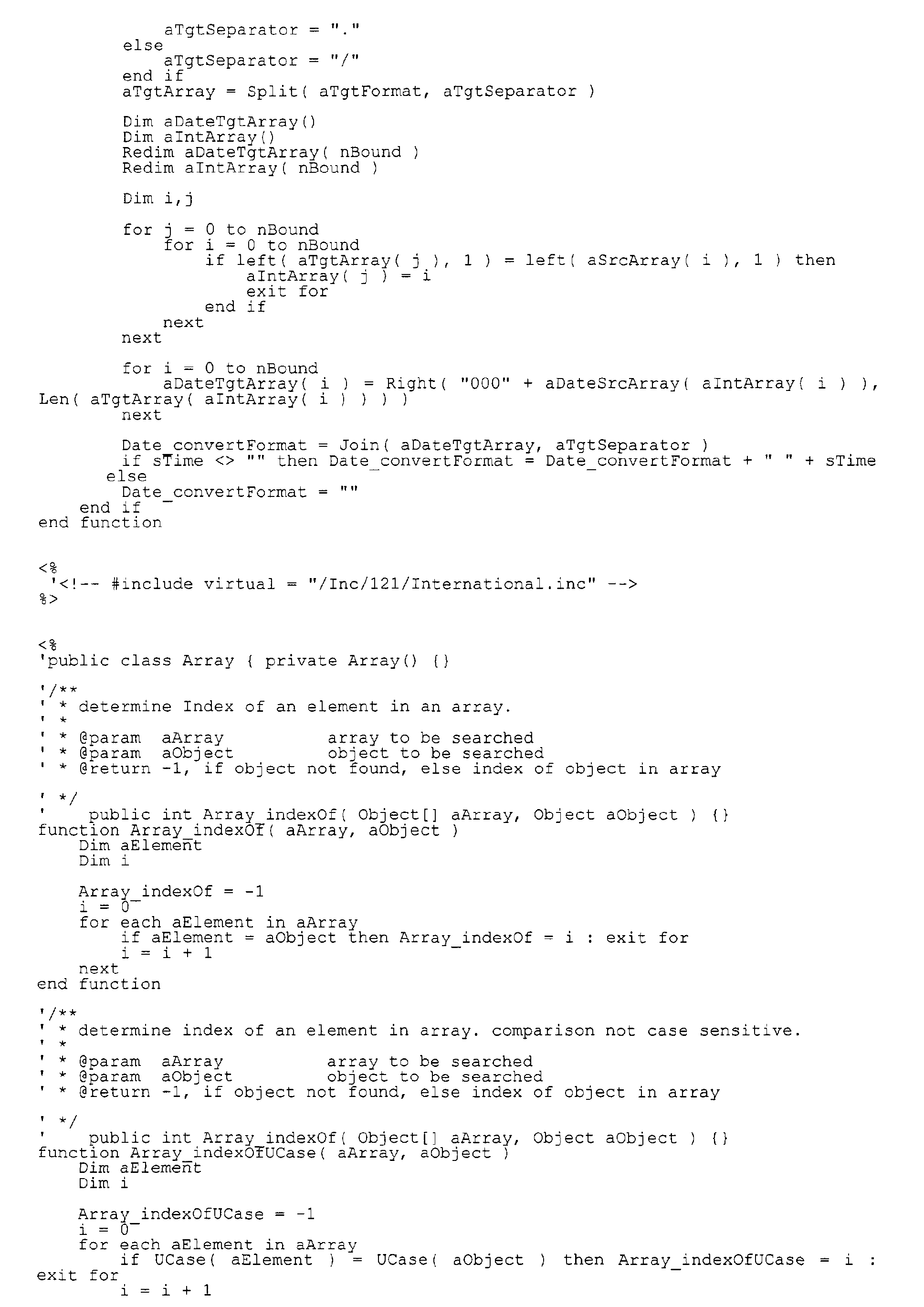

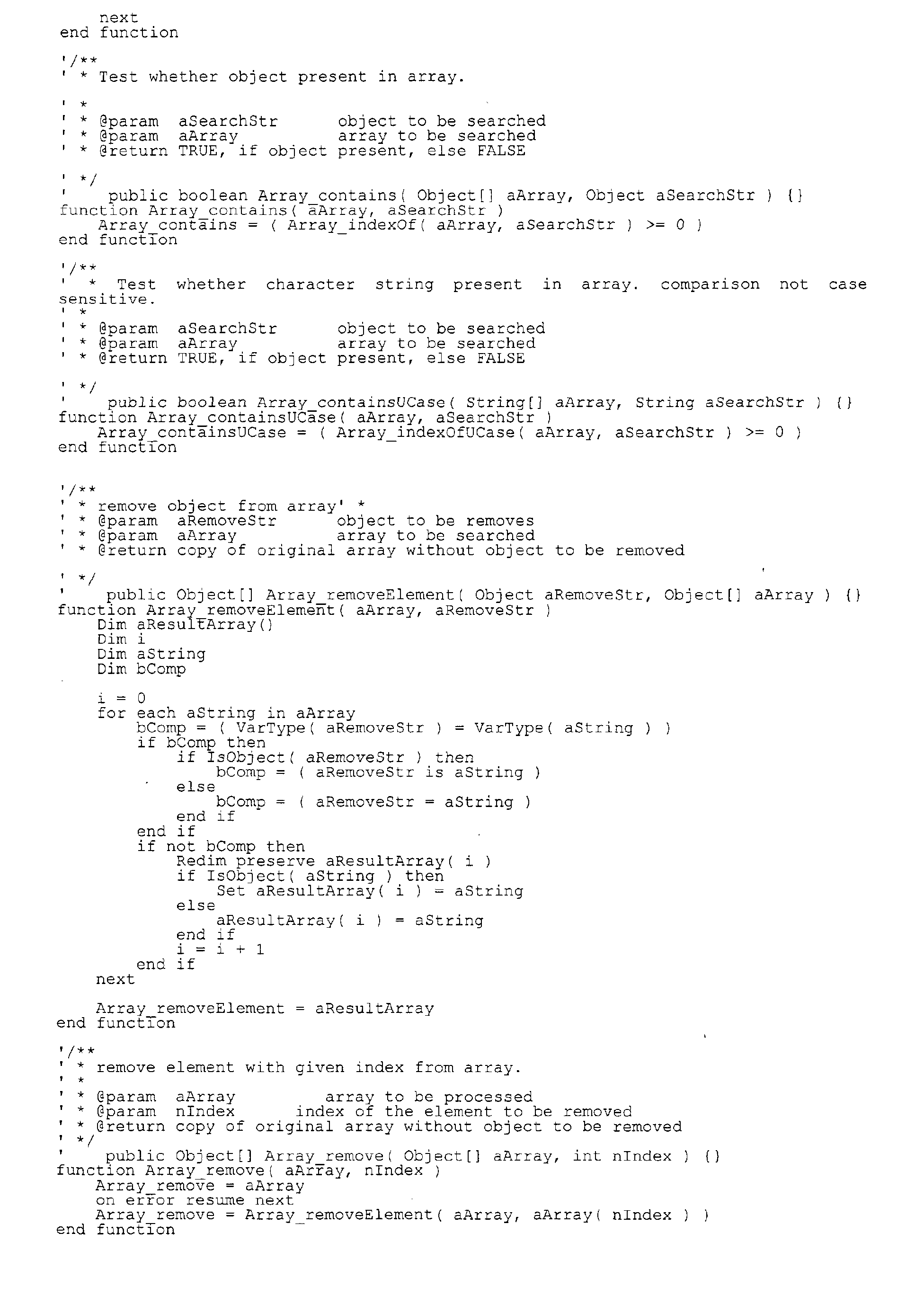

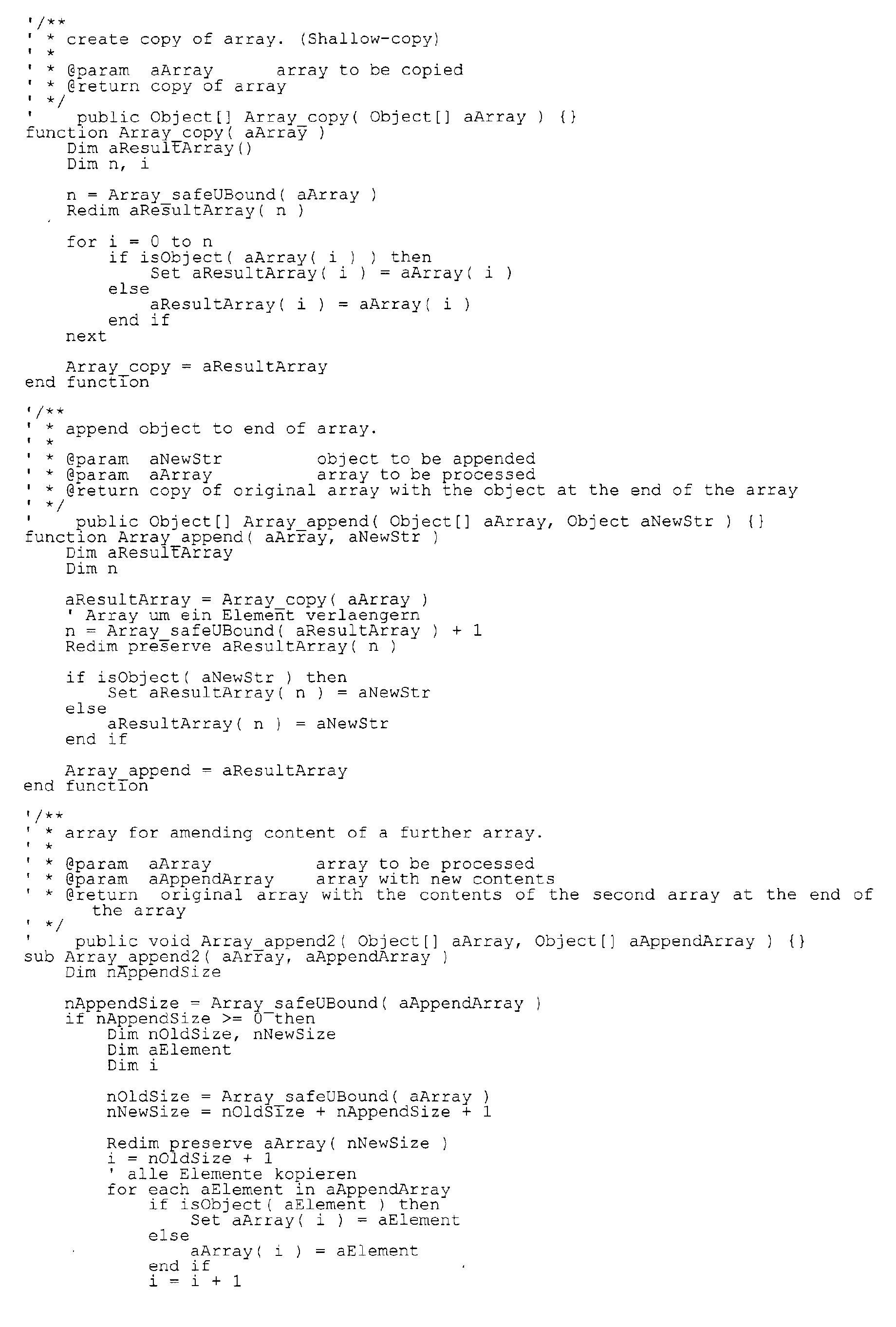

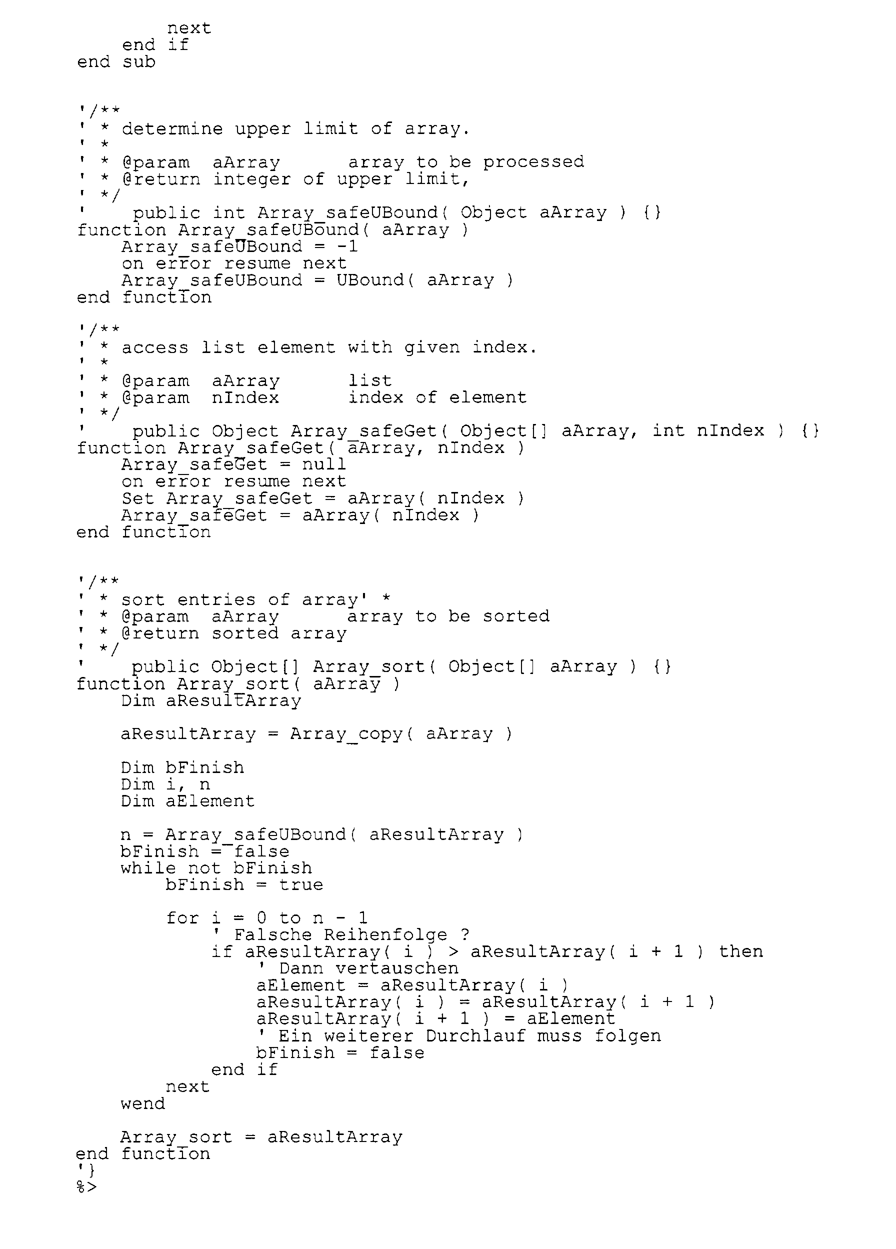

## Claims

1. Method of providing resources adapted to a user environment, including
- obtaining a user parameter for setting the user environment,
- executing an application independent of the user environment including reading a resource identifier independent of the user parameter,
- loading a lookup object linking the resource identifier and resource data dependent on the user parameter, and
- calling a lookup function for obtaining from the lookup object resource data based on the read resource identifier.

2. Method of claim 1, wherein the resource data are constituted by at least on one of the group consisting of
- an array of at least one character, and
- a resource function including rules for character representation.

3. Method of claim 2, wherein the resource function includes rules for at least one of the group consisting of
- date representation,
- time representation,
- currency representation, and
- floating point representation.

4. Method of one of the claims 1 - 3, wherein the user environment includes at least one of the group consisting of
- a location, and
- a user language preference.

5. Method of one of the claims 1 - 4, wherein for each user at least one lookup object is loaded.

6. Method of one of the claims 1 - 4, wherein for a plurality of users at least one lookup object is loaded.

7. Method of one of the claims 1 - 6, wherein
- the lookup function includes
- generating a string identifier consisting of the resource identifier and the user parameter,
- performing the lookup function using the string identifier, and
- the lookup object includes an assignment between the string identifier and the resource data dependent on the user parameter.

8. Method of one of the claims 1 - 6, wherein the lookup function includes calling a dictionary function for obtaining one of a plurality of lookup objects corresponding to the user parameter and which links the resource identifier with the resource data, and

9. Method of one of the preceding claims 1 - 6, wherein the lookup object links the resource identifier with a plurality of user parameters and each of the plurality of user parameters with resource data.

10. Method of one of the preceding claims, wherein
- the application is executed at an application means and is controlled by a client,
- the user parameter is received at the application means from the client, and
- the resource data are transmitted to the client.

11. Method of one of the preceding claims, further including
- reading resource data, and
- calling the lookup function for obtaining from the lookup object a resource identifier based on the read resource data.

12. Method of one of the preceding claims, wherein the user parameter is stored in an object.

13. Method of one of the preceding claims, wherein the user parameter is passed from a client to an application server executing the application.

14. Method of one of the preceding claims, wherein a programming language is used for implementing the method of one of the claims 1 - 13.

15. Method of one of the preceding claims, wherein the programming language is a scripting language.

16. Method of one of the preceding claims, wherein said scripting language is the Visual Basic Scripting language.

17. Method of one of the preceding claims, wherein said programming language is the Visual Basic Scripting language and said program is in the form of Microsoft Active Server Pages.

18. A computer program provided in accordance with the method of one of the preceding claims.

19. A computer readable medium, having recorded thereon the program according to claim 17.

20. A computer program product comprising the computer readable medium according to claim 18.

21. Resource means for providing resources depending on a user environment, including
- user parameter means (11) for obtaining a user parameter for setting the user environment,
- application means (12) for executing an application independent of the user parameter including reading a resource identifier independent of the user parameter, and
- lookup means (13) for initializing a lookup object linking the resource identifier and resource data, the resource data being dependent on the user parameter, and for calling a lookup function for obtaining from the lookup object resource data based on the read resource identifier.

22. Resource means of claim 21, wherein the resource data are constituted by at least on one of the group consisting of
- an array of at least one character, and
- a resource function including rules for character representation.

23. Resource means of one of the claims 21 and 22, wherein the resource function includes rules for at least one of the group consisting of
- date representation,
- time representation,
- currency representation, and
- floating point representation.

24. Resource means of one of the claims 21 - 23, wherein the user environment includes at least one of the group consisting of
- a location, and
- a user language preference.

25. Resource means of one of the claims 21 - 24, including means for loading at least one lookup object for each user.

26. Resource means of one of the claims 21 - 24, including means for loading at least one lookup object for a plurality of users.

27. Resource means of one of the claims 21 - 26, wherein
- the lookup means includes
- means for generating a string identifier consisting of the resource identifier and the user parameter,
- means for performing the lookup function using the string identifier, and
- the lookup object includes an assignment between the string identifier and the resource data dependent on the user parameter.

28. Resource means of one of the claims 21 - 26, comprising means for calling a dictionary function for obtaining one of a plurality of lookup objects corresponding to the user parameter and which links the resource identifier with the resource data.

29. Resource means of one of the claims 21 - 26, wherein the lookup object links the resource identifier with a plurality of user parameters and each of the plurality of user parameters with resource data.

30. Resource means of one of the claims 21 - 29, wherein
- the application executed at the application means is controlled by a client,
- the user parameter means is arranged for receiving the user parameter from the client, and
- the resource means is arranged to transmit the resource data to the client.

31. Resource means of one of the claims 21 - 30, wherein
- the application means is adapted to read resource data, and
- the lookup means is adapted to obtain from the lookup object a resource identifier based on the read resource data.

32. Resource means of one of the claims 21 - 31, wherein the user parameter is stored in an object.

33. Resource means of one of the claims 21 - 32, wherein the user parameter is passed from a client to an application server executing the application.

34. Client adapted to cooperate with the resource means of one of the claims 21 - 33, including
- means for setting the user parameter, and
- means for transmitting the user parameter to the data processing device.

35. Data processing system for providing resources depending on a user environment, comprising a client and resource means, wherein
- the client includes
- user parameter means for setting a user parameter for selecting the user environment, and
- means for transmitting the user parameter to the data processing device,
- the resource means includes
- user parameter means for obtaining a user parameter for setting the user environment,
- application means for executing an application independent of the user environment including reading a resource identifier independent of the user parameter, and
- lookup means for calling a lookup function for obtaining from the lookup object resource data based on the read resource identifier and for loading a lookup object linking the resource identifier and resource data dependent on the user parameter.
